# EUROPÄISCHE PATENTANMELDUNG

(11) **EP 2 385 074 A1**
(43) Veröffentlichungstag der Anmeldung: **09.11.2011**
(21) Anmeldenummer: 10290249.1
(22) Anmeldetag: 07.05.2010
(51) Int. Cl.: C08F 236/12, C08L 19/00, C08C 19/02

(54) **Nitrilkautschuke und deren Herstellung in organischen Lösungsmitteln**

(71) Anmelder: LANXESS Deutschland GmbH, 51369 Leverkusen (DE); Karlsruher Institut für Technologie, 76131 Karlsruhe (DE)
(72) Erfinder: Klimpel, Michael, Dr., 40764 Langenfeld (DE); Brandau, Sven Dr., 67000 Strasbourg (FR); Westeppe, Uwe, Dr., 67610 La Wantzenau (FR); Barner-Kowollik, Christopher, Prof. Dr., 76297 Stutensee-Blankenloch (DE); Kaiser, Andreas, Dr., 67000 Strasbourg (FR)

(57) **Zusammenfassung**

Bereitgestellt wird ein neues Verfahren zur Herstellung von Nitrilkautschuken durch radikalische Polymerisation in einem organischen Lösungsmittel und in Gegenwart spezieller Regler-Substanzen. An diese Polymerisation kann sich eine Hydrierung zu ebenfalls neuen hydrierten Nitrilkautschuken anschließen, vorteilhafterweise erfolgt die Hydrierung ebenfalls in organischen Lösungsmittel. Die erhaltenen optional hydrierten Nitrilkautschuke zeichnen sich dadurch aus, dass sie in der Polymerhauptkette bzw. als Endgruppen Fragmente der eingesetzten Regler-Substanzen aufweisen. Sie können mit einer breiten Vielfalt von Molekulargewichten und Polydispersitätsindices hergestellt werden, insbesondere mit sehr geringen Polydispersitätsindices.

## Beschreibung

Die vorliegende Erfindung betrifft ein Verfahren zur Herstellung von Nitrilkautschuken durch radikalische Polymerisation, die in Lösung und in Gegenwart spezieller Regler-Verbindungen durchgeführt wird, sowie neue Nitrilkautschuke, die in der Polymerhauptkette oder an den Kettenenden auf die Regler-Verbindungen zurückgehende Strukturelemente aufweisen, ein Verfahren zur Hydrierung derartiger Nitrilkautschuke und die entsprechenden hydrierten Nitrilkautschuke.

Unter Nitrilkautschuken, abgekürzt auch als "NBR" bezeichnet, werden Kautschuke verstanden, bei denen es sich um Co- oder Terpolymere aus mindestens einem α,β-ungesättigten Nitril, mindestens einem konjugierten Dien und gegebenenfalls einem oder mehreren weiteren copolymerisierbaren Monomeren handelt. Unter hydrierten Nitrilkautschuken ("HNBR") werden entsprechende Co- oder Terpolymere verstanden, bei denen die C=C-Doppelbindungen der einpolymerisierten Dien-Einheiten ganz oder teilweise hydriert sind.

Sowohl NBR als auch HN-BR nehmen seit vielen Jahren einen- festen Platz im Bereich der Spezialelastomere ein. Sie verfügen über ein ausgezeichnetes Eigenschaftsprofil in Form einer ausgezeichneten Ölbeständigkeit, einer guten Hitzebeständigkeit, einer hervorragenden Beständigkeit gegen Ozon und Chemikalien, wobei letztere im Fall des HNBR noch ausgeprägter als beim NBR sind. NBR und HNBR weisen ferner sehr gute mechanische sowie anwendungstechnische Eigenschaften auf. Aus diesem Grund finden sie breite Verwendung in den verschiedensten Anwendungsgebieten und werden beispielsweise eingesetzt zur Herstellung von Dichtungen, Schläuchen, Riemen und Dämpfungselementen im Automobilsektor, ferner für Statoren, Bohrlochdichtungen und Ventildichtungen im Bereich der Ölförderung sowie auch für zahlreiche Teile der Elektroindustrie, des Maschinen- und Schiffsbaus. Kommerziell erhältlich sind eine Vielzahl unterschiedlicher Typen, die sich je nach Anwendungsbereich durch unterschiedliche Monomere, Molekulargewichte, Polydispersitäten sowie mechanische und physikalische Eigenschaften auszeichnen. Neben den Standardtypen werden vor allem Spezialtypen, die sich durch Gehalte spezieller Termonomere oder besondere Funktionalisierungen auszeichnen, zunehmend nachgefragt.

Im praktischen Einsatz der (H)NBR Kautschuke kommt dabei auch der Vulkanisation der Kautschuke, d.h. insbesondere dem Vernetzersystem und den Vulkanisationsbedingungen, eine wachsende Bedeutung zu. So wurden neben den bereits seit vielen Jahrzehnten existierenden klassischen Kautschuk-Vernetzungssystemen auf Basis von Peroxiden bzw. Schwefel in den letzten Jahren diverse neue Konzepte zur alternativen Vernetzung entwickelt. Derartige Vernetzungskonzepte beziehen auch Polymere mit ein, die aufgrund funktioneller Gruppen nicht allen Vernetzungsformen und -agentien zugänglich sind und daher eine besondere Herausforderung darstellen.

Großtechnisch werden Nitrilkautschuke fast ausschließlich durch sogenannte Emulsionspolymerisation hergestellt. Zur Regelung des Molekulargewichts und damit auch der Viskosität des entstehenden Nitrilkautschuks werden dabei üblicherweise Dodecylmercaptane, insbesondere Tertiärdodecylmercaptane ("TDDM") eingesetzt. Nach der Polymerisation wird der erhaltene NBR-Latex in einem ersten Schritt koaguliert und daraus der NBR-Feststoff isoliert. Sofern eine weiterführende Hydrierung des Nitrilkautschuks zum HNBR gewünscht ist, erfolgt diese Hydrierung ebenfalls nach bekannten Methoden des Standes der Technik, beispielsweise unter Einsatz homogener oder auch heterogener Hydrierkatalysatoren. Die Katalysatoren basieren üblicherweise auf Rhodium, Ruthenium oder Titan. Es können aber auch Platin, Iridium, Palladium, Rhenium, Ruthenium, Osmium, Kobalt oder Kupfer entweder als Metall oder aber bevorzugt in Form von Metallverbindungen eingesetzt werden.

In großtechnischem Maßstab werden derartige Hydrierreaktionen von NBR zum HNBR üblicher Weise in homogener Phase, d.h. in einem organischen Lösungsmittel durchgeführt. Geeignete Katalysatoren und Lösungsmittel hierfür sind beispielsweise aus DE-A 25 39 132 und EP-A 0 471250 bekannt. Insbesondere der sogenannte Wilkinson-Katalysator hat sich für eine selektive Hydrierung der Nitrilkautschuke in Monochlorbenzol als organischem Lösungsmittel bewährt. Um diese Hydrierung in einem organischem Medium durchzuführen, muss somit der nach der Polymerisation in wässriger Emulsion erhaltene Nitrilkautschuk zunächst isoliert werden. Dies ist verfahrenstechnisch und apparativ aufwändig und damit auch wirtschaftlich nicht uneingeschränkt attraktiv.

Hinzukommt, dass im Verlauf der Hydrierung von Nitrilkautschuken ein ganz erheblicher Anstieg der Viskosität (üblicherweise um einen Faktor von 2 oder mehr) zu beobachten ist (der sogenannte Mooney-Sprung). Aus diesem Grund müssen Nitrilkautschuke unter Umständen vor der Hydrierung in einem weiteren Schritt einem Molekulargewichtsabbau (z.B. durch Metathese) unterzogen werden, um letztendlich einen hydrierten Nitrilkautschuk mit nicht zu hohem Molekulargewicht, respektive nicht zu hoher Viskosität erhalten zu können. Auf den bisher bekannten und großtechnisch umsetzbaren Synthesewegen sind auch den Möglichkeiten zur Beeinflussung der Polydispersität in gewissem Maß Grenzen gesetzt.

Es gab daher bereits verschiedenste Ansätze zur Optimierung der Herstellungsverfahren von NBR sowie HNBR. So wurde versucht, die Polymerisation zum Nitrilkautschuk in organischer Lösung durchzuführen. Diese Arbeiten waren jedoch bisher wenig Erfolg versprechend, und eine tatsächliche technische Umsetzung derartiger Verfahren ist bisher weder aus der Literatur noch aus der Praxis bekannt. In der Zusammenfassung der Dissertation von C. Hollbeck, Universität-Gesamthochschule Essen, 1995, Seite II, wird für die Copolymerisation von Acrylnitril und 1,3-Butadien in organischer Lösung folgendes festgestellt (Zitat): "Mit einem Zahlenmittel des Polymerisationsgrades Pn von 1589 (Molekulargewicht (Mn)= ∼85.800 g/mol) und einem Umsatz von 40,5% konnten die gesteckten Ziele bei einer Reaktionstemperatur von 343 K in 40 Stunden realisiert werden. Eine Zeitverkürzung auf 18 Stunden ließ sich nur unter Reduzierung des geforderten Umsatzes erreichen. Wie Testversuche zeigten, ist unter den gegebenen Bedingungen auch bei einer Erhöhung der Temperatur auf 353 K eine Kombination von Pn ≥ 1400 und Umsatz größer als 40% nicht im Bereich des Möglichen". Eine Beschränkung des erreichbaren Umsatzes auf gut 40 % innerhalb einer Reaktionszeit von 40 Stunden machen das dort beschriebene Verfahren der organischen Lösungspolymerisation für die Praxis technisch und wirtschaftlich untauglich.

Vor dem oben geschilderten Hintergrund bestand die **Aufgabe der vorliegenden Erfindung** somit einerseits darin, neue optional hydrierte Nitrilkautschuke zur Verfügung zu stellen, die den Aufbau besonderer Polymerarchitekturen und Mikrostrukturen und damit die Einstellung besonderer Eigenschaftsprofile für die späteren Anwendungen ermöglichen und ferner eine einfache Vernetzung zulassen. Zum anderen sollte gleichzeitig die Aufgabe gelöst werden, diese speziellen neuen Nitrilkautschuke mit einer breiten Palette von Molekulargewichten und Polydispersitäten und im nächsten Schritt auch die entsprechenden hydrierten Nitrilkautschuke über ein möglichst einfaches Herstellungsverfahren zugänglich zu machen.

**Überraschenderweise** wurde gefunden, dass es möglich ist, neue optional hydrierte Nitrilkautschuke durch radikalische Polymerisation in Lösung unter Einsatz spezieller RAFT-Regler und eine sich optional anschließende Hydrierreaktion herzustellen.

**Gegenstand der Erfindung** sind neue **Nitrilkautschuke** enthaltend
(i) Wiederholungseinheiten abgeleitet von mindestens einem konjugierten Dien, mindestens einem α,β-ungesättigten Nitril und gegebenenfalls einem oder mehreren weiteren copolymerisierbaren Monomeren sowie
(ii) ein oder mehrere Strukturelemente der allgemeinen Formeln (I), (II), (III), (IV) oder (V) 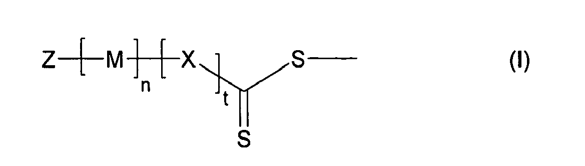 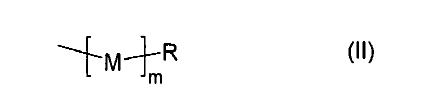 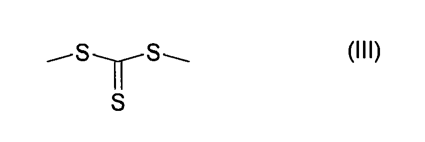 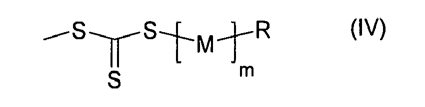 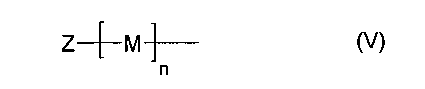
worin
**Z** für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylallcyl, Alkoxy, Aryloxy, Heteroaryloxy, Amino, Amido, Hydroxyimino, Carbamoyl, Alkoxycarbonyl, F, Cl, Br, I, Hydroxy, Phosphonato, Phosphinato, Alkylthio, Arylthio, Sulfanyl, Thiocarboxy, Sulfinyl, Sulfono, Sulfino, Sulfeno, Sulfonsäuren, Sulfamoyl, Silyl, Silyloxy, Nitril, Carbonyl, Carboxy, Oarycarbonyl, Oacysulfonyl, Oxo, Thioxo, Borate, Selenate, Epoxy, Cyanate, Thiocyanate, Isocyanate, Thioisocyanate und Isocyanide,
**R** (a) für den Fall, dass m ≠ 0 ist, die gleichen Bedeutungen besitzen kann wie der Rest Z und (b) für den Fall, dass m = 0 ist, für H, einen linearen oder verzweigten, gesättigten, ein- oder mehrfach ungesättigten Alkylrest, einen gesättigten, ein- oder mehrfach ungesättigten Carbo-oder Heterocyclylrest, Aryl, Heteroaryl, Arylalkyl, Heteroarylalkyl, Alkoxy, Aryloxy, Heteroaryloxy, Amino, Amido, Carbamoyl, Alkoxy, Aryloxy, Alkylthio, Arylthio, Sulfanyl, Thiocarboxy, Sulfinyl, Sulfono, Sulfino, Sulfeno, Sulfonsäuren, Sulfamoyl, Carbonyl, Carboxy, Oxycarbonyl, Oxysulfonyl, Oxo, Thioxo, Epoxy, Cyanate, Thiocyanate, Isocyanate, Thioisocyanate oder Isocyanide steht,
**M** für Wiederholungseinheiten eines oder mehrerer, ein- oder mehrfach ungesättigter Monomeren steht, umfassend konjugierte oder nicht-konjugierte Diene, Alkine und Vinylverbindungen, oder für ein Strukturelement, welches sich ableitet Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide,
**n und m** gleich oder verschieden sind und jeweils im Bereich von 0 bis 10.000 liegen,
**t** 0 oder 1 ist, sofern n= 0, und gleich 1 ist, sofern n ≠ 0, und
**X** für C(Z₂), N(Z), P(Z), P(=O)(Z), O, S, S(=O) oder S(=O)₂ steht, wobei Z in diesen Resten die gleiche Bedeutungen besitzen kann, wie zuvor ausgeführt.

Im Sinne dieser Anmeldung ist der Begriff "Nitrilkautschuk(e)" breit zu interpretieren und umfasst sowohl die Nitrilkautschuke als auch hydrierte Nitrilkautschuke. Sofern es sich um hydrierte Nitrilkautschuke handelt, bedeutet die oben genannte Formulierung "Nitrilkautschuke enthaltend Wiederholungseinheiten abgeleitet von" somit, dass es sich bei den Wiederholungseinheiten, die auf das konjugierte Dien zurückgehen, um solche handelt, in denen die nach der Polymerisation im Polymer zunächst vorhandenen C=C Doppelbindungen ganz oder teilweise hydriert sind.

Soweit in dieser Anmeldung der Begriff "substituiert" verwendet wird, so bedeutet dies, dass ein Wasserstoff-Atom an einem angegebenen Rest oder Atom durch eine der angegebenen Gruppen ersetzt ist, mit der Maßgabe, dass die Wertigkeit des angegebenen Atoms nicht überschritten wird und immer nur unter der Bedingung, dass diese Substitution zu einer stabilen Verbindung führt.

**Gegenstand der Erfindung** ist ferner ein **Verfahren zur Herstellung von Nitrilkautschuken**, indem man
a) zunächst eine radikalische Polymerisation mindestens eines konjugierten Diens, mindestens eines α,β-ungesättigten Nitrils und gegebenenfalls eines oder mehrerer weiterer copolymerisierbarer Monomere in Gegenwart mindestens eines organischen Lösungsmittels und mindestens eines Reglers durchführt und
b) optional anschließend eine Hydrierung,
wobei als **Regler mindestens eine Verbindung der allgemeinen Strukturformel (VI)** 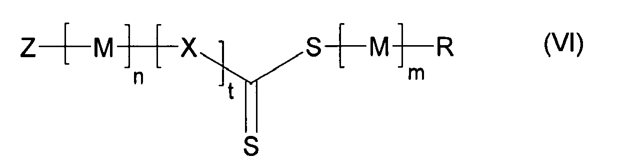 worin
Z für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Hydroxyimino, Carbamoyl, Alkoxycarbonyl, F, Cl, Br, I, Hydroxy, Phosphonato, Phosphinato, Alkylthio, Arylthio, Sulfanyl, Thiocarboxy, Sulfinyl, Sulfono, Sulfino, Sulfeno, Sulfonsäuren, Sulfamoyl, Silyl, Silyloxy, Nitril, Carbonyl, Carboxy, Oxycarbonyl, Oxysulfonyl, Oxo, Thioxo, Borate, Selenate, Epoxy, Cyanate, Thiocyanate, Isocyanate, Thioisocyanate und Isocyanide,
**R** (a) für den Fall, dass m ≠ 0 ist, die gleichen Bedeutungen besitzen kann wie der Rest Z und (b) für den Fall, dass m = 0 ist, für H, einen linearen oder verzweigten, gesättigten, ein- oder mehrfach ungesättigten Alkylrest, einen gesättigten, ein- oder mehrfach ungesättigten Carbo-oder Heterocyclylrest, Aryl, Heteroaryl, A rylalkyl, Heteroarylalkyl, Alkoxy, Aryloxy, Heteroaryloxy, Amino, Amido, Carbamoyl, Alkoxy, Aryloxy, Alkylthio, Arylthio, Sulfanyl, Thiocarboxy, Sulfinyl, Sulfono, Sulfino, Sulfeno, Sulfonsäuren, Sulfamoyl, Carbonyl, Carboxy, Oxycarbonyl, Oxysulfonyl, Oxo, Thioxo, Epoxy, Cyanate, Thiocyanate, Isocyanate, Thioisocyanate oder Isocyanide steht,
**M** für Wiederholungseinheiten eines oder mehrerer, ein- oder mehrfach ungesättigter Monomeren steht, umfassend konjugierte oder nicht-konjugierte Diene, Alkine und Vinylverbindungen, oder für ein Strukturelement, welches sich ableitet Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide,
**n und m** gleich oder verschieden sind und jeweils im Bereich von 0 bis 10.000 liegen,
**t** 0 oder 1 ist, sofern n= 0, und gleich 1 ist, sofern n ≠ 0, und
**X** für C(Z₂), N(Z), P(Z), P(=O)(Z), O, S, S(=O) oder S(=O)₂ steht, wobei Z in diesen Resten die gleiche Bedeutungen besitzen kann, wie zuvor für die Formel (VI) ausgeführt.

Die erfmdungsgemäßen optional hydrierten Nitrilkautschuke zeichnen sich durch die Anwesenheit von Strukturelementen der Formeln (I), (II) und/oder (III) entweder in der Polymerhauptkette oder als Endgruppen aus. Derartige optional hydrierte Nitrilkautschuke können aufgrund dieser Strukturelemente/Endgruppen Folgeumsetzungen mit anderen polymerisierbaren Monomeren unterworfen werden, da die Strukturelemente/Endgruppen über eine weitere Fragmentierung als RAFT Agenzien fungieren können. Auf diesem Weg wird der gezielte Aufbau verschiedenster Polymerarchitekturen möglich. Darüberhinaus lassen sich diese erfindungsgemäßen optional hydrierten Nitrilkautschuke auch einfacher vernetzen als herkömmliche Nitrilkautschuke, da die Strukturelemente/Endgruppen den üblichen Vernetzungsagenzien, insbesondere denen auf Schwefelbasis strukturell ähnlich sind. Insofern kann eine ausreichende Vernetzungsdichte mit den erfindungsgemäßen optional hydrierten Nitrilkautschuken bereits mit einer geringeren Menge an Vernetzer erreicht werden. Zudem wird durch die Vernetzung über die Endgruppen die Zahl loser Polymerkettenenden im Vulkanisat verringert, wodurch es zu verbesserten Eigenschaften wie z.B. den dynamischen Eigenschaften kommt.

Dass eine radikalische Polymerisation zum Nitrilkautschuk in organischer Lösung überhaupt möglich ist, war für einen Fachmann völlig unerwartet, da alle bisherigen Untersuchungen zur Lösungspolymerisation von NBR nicht zu vernünftigen Erfolgen geführt haben.

Die zuvor beschriebenen Regler-Verbindungen sind aus der sogenannten RAFT-Technologie bekannt. Diese Technologie wird bereits zur Synthese verschiedener Polymere eingesetzt **(**WO-A-01/60792**,** US 7,230,063 B1**,** WO-A-2007/003782**,** US-A-2008/0153982**,** WO-A-2005/061555**)**.

In WO-A-98/01478 wird die Herstellung verschiedenster Homo- und Copolymere beschrieben. Als Homopolymere werden z.B. Poly(meth)acrylate, Poly(meth)acrylsäure, Polyacrylamide und Polystyrol synthetisiert. Als Blockcopolymere werden z.B. Poly(methylacrylat-block-ethylacrylat), Poly(n-butylacrylat-block-acrylsäure), Poly(4-methylstyrol-block-styrol), Poly(styrol-block-acrylamid), Poly(methylmethacrylat-block-styrol), Poly(acrylnitril-co-styrol) (Beispiel 67), Poly(styrol-co-butadien) (Beispiel 69) und andere hergestellt. Eine Copolymerisation eines konjugierten Diens, insbesondere 1,3-Butadien, mit einem α.β-ungesättigten Nitril, insbesondere Acrylnitril, wird jedoch in WO-A-98/01478- weder beschrieben oder nahegelegt.

Bekannt ist es bereits, reines Polyacrylnitril (PAN) durch RAFT Technologie herzustellen. Aus Macromolecules 2003, 36, 8537 sind erste Versuche bekannt, bei denen Polyacrylnitril mit nur geringen Molmassen von bis zu 16.000 gm/mol und engen Molekulargewichtsverteilungen nahe 1,1 erhalten wurde. Seitdem wurden weitere Arbeiten durchgeführt, wodurch es gelang Polyacrylnitril durch RAFT Polymerisation mit vernünftigen Ergebnissen herzustellen. Dieses Verfahren wird unter anderem in European Polymer Journal (2008), 44(4), 1200-1208 (Xiao-hui Liu, Gui-bao Zhang, Bai-xiang Li, Yun-gang Bai, Ding Pan und Yue-sheng Li) beschrieben. Hier konnte mittels RAFT-Technologie Polyacrylnitril mit hohem Molekulargewicht (Mn >200.000 g/mol) und einem geringen Polydispersitätsindex (PDI ∼ 1,7) in Lösung unter Einsatz von Bis(thiobenzoyl)disulfid oder Bis(thiophenylacetoyl)disulfid, als Vorstufen für die in-situ erzeugten Regler 2-Cyanoprop-2-yldithiobenzoat und 2-Cyanoprop-2-yl-dithiophenylacetat, erhalten werden. Wie in Journal of Polymer Science, Part A: Polymer Chemistry (2005), 44(1), 490-498 beschrieben, führt die Verwendung von Dibenzyltrithiocarbonaten als RAFT-Regler für die Homopolymerisation von Acrylnitril dagegen nur zu Polymeren mit geringen Molekulannassen (Mₙ) von < 30.000 g/mol, selbst wenn die Polydispersitäten zwischen 1,02 und 2,35 liegen. Aus Macromolecular Chemistry and Physics (2002), 203(3), 522-537 ist es ferner bekannt, dass die Homopolymerisation von 1,3-Butadien durch RAFT-Technologie nur Polymere mit geringen Molekulargewichten liefert: Die erzielten Molekulargewichte (Mₙ) liegen noch niedriger als bei der o.g. Herstellung von Polyacrylnitril mit Dibenzyltrithiocarbonaten als RAFT-Regler und betragen maximal 10.500 g/mol bei einer gleichzeitig hohen Polydispersität von 3,40. Es können hier zwar auch deutlich niedrigere Polydispersitäten von bis zu 1,24 erhalten werden, dies jedoch nur unter substanzieller Einbuße beim Molekulargewicht (Mₙ) auf nur noch 1.300 g/mol.

Für Nitrilkautschuke mit Wiederholungseinheiten mindestens eines konjugierten Diens, mindestens eines α,β-ungesättigten Nitrils und gegebenenfalls einem oder mehreren weiteren copolymerisierbaren Monomeren wurde die Anwendbarkeit der RAFT-Technologie bisher weder beschrieben noch irgendwo nahegelegt. Dass der Einsatz sogenannter RAFT-Regler bei der NBR Polymerisation zum Erfolg führen würde, war in der Tat völlig unerwartet, insbesondere vor dem Hintergrund der oben beschriebenen Untersuchungen zur Herstellung von Polybutadien (Macromolecular Chemistry and Physics (2002), 203(3), 522-537), welche lediglich Molekulargewichte in technisch uninteressanten Groessenordnungen ergeben (technisch verwertbare Polymere auf Butadien-Basis erfordern im Allgemeinen ein Molekulargewicht **Mn** > 50.000 g/mol, gleiches gilt für statistische Copolymere auf Basis Acrylnitril und Butadien).

Mit dem erfindungsgemäßen Verfahren gelingt es, in Zeiträumen, die denen der herkömmlichen Emulsionspolymerisation zur NBR-Herstellung vergleichbar sind, zu Umsätzen zu gelangen, die das Verfahren für eine großtechnische Umsetzung geeignet machen. So lässt sich bei einer Polymerisationszeit von kleiner 10 Stunden bereits ein Umsatz von 50% erzielen bei gleichzeitiger Erzeugung technisch akzeptabler Molekulargewichte (Mn > 50.000 g/mol) und mit - im Vergleich zu herkömmlichem Emulsions-NBR - bis heute unerreicht niedrigen Polydispersitäten von deutlich kleiner 2.0.

### Detaillierte Beschreibung

Im erfmdungsgemäßen Verfahren wird mindestens ein Regler der zuvor genannten allgemeinen Formel (VI) eingesetzt.

Die in den Resten Z und R der allgemeinen Formel (VI) genannten Bedeutungen können jeweils ein- oder mehrfach substituiert sein. Bevorzugt weisen die folgenden Reste eine ein- oder mehrfache Substitution auf: Alkyl, Carbocyclyl, Heterocyclyl, Aryl, Heteroaryl, Arylalkyl, Heteroarylalkyl, Alkoxy, Aryloxy, Alkylthio, Arylthio, Amino, Amido, Carbamoyl, Phosphonato, Phosphinato, Sulfanyl, Thiocarboxy, Sulfinyl, Sulfono, Sulfino, Sulfeno, Sulfamoyl, Silyl, Silyloxy, Carbonyl, Carboxy, Oxycarbonyl, Oxysulfonyl, Oxo, Thioxo, Borate, Selenate und Epoxy.

Als Substituenten kommen wiederum - soweit sich chemisch stabile Verbindungen ergeben - alle Bedeutungen in Frage, die Z annehmen kann. Besonders geeignet als Substituenten sind Halogen, bevorzugt Fluor, Chlor, Brom oder Iod, Nitril (CN) und Carboxy.

Die für Z und R in der allgemeinen Formel (VI) genannten Bedeutungen schließen explizit auch Salze der genannten Reste ein, soweit diese chemisch möglich und stabil sind. Hierbei kann es sich beispielsweise um Ammonium-Salze, Alkali-Salze, Erdalkali-Salze, Aluminium-Salze oder um protonierte Formen der Regler der allgemeinen Formel (VI) handeln.

Die für Z und R in der allgemeinen Formel (VI) genannten Bedeutungen schließen auch organometallische Reste ein, beispielsweise solche, die dem Regler eine Grignard Funktion verleihen. Z und R können ferner ein Carbanion darstellen bzw. aufweisen mit Lithium, Zink, Zinn, Aluminium, Blei und Bor als Gegenion.

Es ist ferner möglich, dass der Regler über den Rest R über einen Linker an eine Festphase oder Trägersubstanz angekoppelt ist. Bei dem Linker kann es sich um dem Fachmann bekannten Wang-, Sasrin-, Rink-Säure-, 2-Chlortrityl-, Mannich-, Safety-Catch-, Traceless- oder photolabile Linker handeln Als Festphasen oder Trägersubstanzen kommen beispielsweise Silica, Ionenaustauscherharze, Tone (Clay), Montmorillonite, vernetztes Polystyrol, Polyethylenglykol gepropft auf Polystyrol, Polyacrylamide ("Pepsyn"), Polyethylenglykol-Acrylamid-Copolymere (PEGA), Cellulose, Baumwolle und gekörntes poröses Glas (CPG, controlled pore glass) in Frage.

Es ist ferner möglich, dass die Regler der allgemeinen Formel (VI) als Liganden für metallorganische Komplexverbindungen fungieren, z.B. für solche auf Basis der Zentralmetalle Rhodium, Ruthenium, Titan, Platin, Iridium, Palladium, Rhenium, Ruthenium, Osmium, Kobalt, Eisen oder Kupfer.

Die in der oben genannten allgemeinen Formel (VI) für den Rest "M" aufgeführten Bedeutungen können ein- oder mehrfach substituiert sein. Somit kann es sich bei **M** um Wiederholungseinheiten eines oder mehrerer, einfach oder mehrfach ungesättigter Monomere handeln, bevorzugt um optional ein- oder mehrfach substituierte konjugierte oder nicht-konjugierte Diene, optional ein- oder mehrfach substituierte Alkine oder optional ein- oder mehrfach substituierte Vinylverbindungen, beispielsweise fluorierte ein-oder mehrfach ungesättigte Vinylverbindungen, oder aber um ein divalentes Strukturelement, welches sich ableitet von substituierten oder unsubstituierten Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide.

Hinter diesen Resten "M" kann sich somit ein monomerer oder polymerer Rest verbergen.

**Bevorzugt** wird ein Regler der allgemeinen Formel (VI) eingesetzt, bei dem
Z und R die zuvor für die allgemeine Formel (VI) genannten Bedeutungen besitzen und
n, m und t alle gleich Null sind.

Dieser bevorzugte **Regler** besitzt somit die **allgemeine Struktur (VIa):** 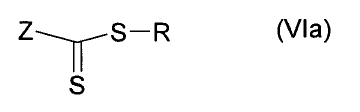 bei dem die Reste Z und R alle zuvor für die allgemeine Formel (VI) genannten Bedeutungen aufweisen können.

### Trithiocarbonate:

Als weiterer bevorzugter Regler kann ein Regler der **allgemeinen Formel (VIb)** eingesetzt werden, 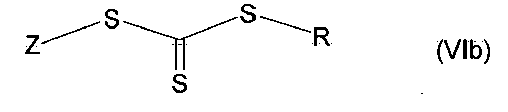 bei dem
Z die zuvor für die allgemeine Formel (VI) genannten Bedeutungen besitzt,
R die zuvor für die allgemeine Formel (VI) für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbildet.

Dieser besonders bevorzugte Regler der allgemeinen Formel (VIb) ergibt sich aus dem Regler der allgemeinen Formel (VI), indem
n und m jeweils = 0 sind,
t gleich 1 ist,
X für Schwefel steht,
Z die zuvor für die allgemeine Formel (VI) genannten Bedeutungen besitzt und
R die zuvor für die allgemeine Formel (VI) für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbildet.

Bei diesen besonders bevorzugten Reglern der allgemeinen Formel (VIb) handelt es sich somit in Abhängigkeit davon, ob Z und R im Rahmen der vorgegebenen Bedeutungen identisch sind oder nicht, um symmetrische oder asymmetrische Trithiocarbonate.

Besonders bevorzugt wird ein Regler der allgemeinen Formel (VIb) eingesetzt, bei dem
Z die zuvor für die allgemeine Formel (VI) genannten Bedeutungen besitzt und
R mit der Maßgabe, dass R nach homolytischer Spaltung der S-R Bindung entweder ein sekundäres, tertiäres oder aromatisch stabilisiertes Radikal ausbildet,
- für einen linearen oder verzeigten, gesättigten oder ein- oder mehrfach ungesättigten, optional ein- oder mehrfach substituierten Alkylrest steht, bevorzugt für einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ein- oder mehrfach ungesättigten, optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)arylrest, inbesondere für Phenyl, Pyridinyl oder Anthracenyl,
- für einen (Hetero)Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen steht.

Insbesondere bevorzugt wird ferner ein Regler der allgemeinen Formel (VIb) eingesetzt, bei dem
Z die zuvor für die allgemeine Formel (VI) genannten Bedeutungen besitzt, allerdings ebenfalls mit der zusätzlichen Einschränkung auf solche Bedeutungen, dass Z nach homolytischer Spaltung der Z-S Bindung entweder ein sekundäres, tertiäres oder aromatisch stabilisiertes Radikal ausbildet.

Hierbei handelt es sich dann um einen Trithiocarbonat-Regler, bei dem beide Reste R und Z Polymerisationsinitiierend wirken.

Ganz besonders bevorzugt wird ferner ein Regler der allgemeinen Formel (VIb) eingesetzt, bei dem
R und Z gleich oder verschieden sind und mit der Maßgabe, dass R und Z nach homolytischer Spaltung der R-S bzw. Z-S Bindung jeweils ein sekundäres, tertiäres oder aromatisch stabilisiertes Radikal ausbilden,
- für einen linearen oder verzeigten, gesättigten oder ein- oder mehrfach ungesättigten, optional ein- oder mehrfach substituierten Alkylrest steht, bevorzugt für einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ein- oder mehrfach ungesättigten, optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)arylrest, inbesondere für Phenyl, Pyridinyl oder Anthracenyl,
- für einen (Hetero)Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen stehen.

Bezüglich der für die allgemeine Formel (VIb) und nachfolgend für die allgemeinen Formeln (VIc), (VId) und (VIe) verwendeten Formulierungen, "dass R nach homolytischer Spaltung der R-S-Bindung ein **sekundäres oder tertiäres Radikal** bildet", gelten die nachfolgenden Definitionen. Diese gelten ebenfalls in analoger Form für die entsprechenden Formulierung "dass Z nach homolytischer Spaltung der Z-S-Bindung ein **sekundäres oder tertiäres Radikal** bildet", soweit diese im Rahmen der Anmeldung im Zusammenhang mit Z verwendet wird.

Das Atom im Rest R, welches die Bindung an S in der allgemeinen Formel (VIb) bewirkt (bzw. den noch folgenden allgemeinen Formeln (VIc), (VId) und (VIe)), führt bei homolytischer Spaltung der R-S Bindung dann zu einem als "tertiär" zu bezeichnenden Radikal, wenn an dieses Atom (die Bindung zum Schwefel ausgenommen) mindestens
(i) über Einfachbindungen drei Substituenten oder
(ii) über eine Einfachbindung ein Substituent und über eine Doppelbindung ein weiterer Substituent gebunden sind oder
(iii) über eine Dreifachbindung ein Substituent gebunden ist,
wobei alle vorgenannten Substituenten ungleich Wasserstoff sein müssen.

Das Atom im Rest R, welches die Bindung an S in den allgemeinen Formeln (VIb), (VIc), (VId) und (VIe) bewirkt, führt bei homolytischer Spaltung der R-S Bindung dann zu einem als "sekundär" zu bezeichnenden Radikal, wenn an dieses Atom
(i) über Einfachbindungen zwei Substituenten gebunden sind oder
(ii) über eine Doppelbindung ein Substituent gebunden ist,
wobei alle vorgenannten Substituenten ungleich Wasserstoff sein müssen und alle weiteren möglichen Substituenten H sind.

Beispiele für Reste R bzw. Z, die bei homolytischer Spaltung der R-S (bzw. Z-S) Bindung zu einem als "tertiär" zu bezeichnenden Radikal führen, sind z.B. tert. Butyl, Cyclohexan-1-nitril-1-yl und 2-Methylpropannitril-2-yl.

Beispiele für Reste R bzw. Z, die bei homolytischer Spaltung der R-S (bzw. Z-S) Bindung zu einem als "sekundär" zu bezeichnenden Radikal führen, sind z.B. sek-Butyl, iso-Propyl und Cycloalkyl, bevorzugt Cyclohexyl.

Bezüglich der nachfolgend für die Formel (VId) verwendeten Maßgabe, "dass Z nach homolytischer Spaltung der Z-S-Bindung ein **primäres Radikal** bildet", gilt folgende Definition: Das Atom im Rest Z, welches die Bindung an S in der allgemeinen Formel (VId) bewirkt, führt bei homolytischer Spaltung der Z-S Bindung dann zu einem als "primär" zu bezeichnenden Radikal, wenn an dieses Atom über eine Einfachbindung kein oder maximal ein Substituent gebunden ist, der nicht Wasserstoff ist. Für Z = H gilt die og. Maßgabe per Definition als erfüllt.

Beispiele für Reste Z, die bei homolytischer Spaltung der Z-S Bindung zu einem als "primär" zu bezeichnenden Radikal führen, sind somit z.B. H, geradkettige C₁-C₂₀ Alkylreste, OH, SH, SR und C₂-C₂₀ Alkylreste mit Verzweigungen jenseits des C-Atoms, das die Bindung an S bewirkt.

### Dithioester:

Als **weiterer bevorzugter Regler** kann ein Regler der **allgemeinen Formel** (**VIc**) eingesetzt werden, 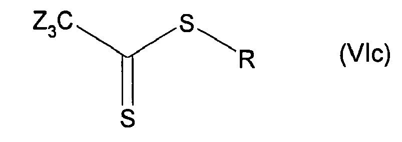 Z die zuvor für die allgemeine Formel (VI) genannten Bedeutungen besitzt,
R die zuvor für die allgemeine Formel (VI) für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbildet.

Dieser besonders bevorzugte Regler der allgemeinen Formel (VIc) ergibt sich aus dem Regler der allgemeinen Formel (VI), wobei
n und m jeweils = 0 sind,
t gleich 1 ist,
X für C(Z)₂ steht,
Z die zuvor für die allgemeine Formel (VI) genannten Bedeutungen besitzt und
R die zuvor für die allgemeine Formel (VI) für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbildet.

Besonders bevorzugt wird ein Regler der allgemeinen Formel (VIc) eingesetzt, bei dem
R mit der Maßgabe, dass R nach homolytischer Spaltung der S-R Bindung entweder ein sekundäres, tertiäres oder aromatisch stabilisiertes Radikal ausbildet,
- für einen linearen oder verzeigten, gesättigten oder ein- oder mehrfach ungesättigten, optional ein- oder mehrfach substituierten Alkylrest steht, bevorzugt einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ungesättigten, optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)Arylrest, inbesondere Phenyl, Pyridinyl oder Anthracenyl,
- für einen (Hetero)Arylalkylrest steht, ganz besonders bevorzugt für einen C₇-C₂₅-(Hetero)Arylalkylrest, insbesondere für Benzyl, Phenylethyl oder 1-Methyl-1-phenyleth-2-yl, oder
- für Thiocarboxy, Carbonyl, Carboxy, Oxo, Thioxo, Epoxy, sowie Salze der genannten Verbindungen steht.

### Asymmetrische Trithiocarbonate:

In einer weiteren bevorzugten Ausführungsform wird mindestens ein **Regler der allgemeinen Formel (VId)** eingesetzt, 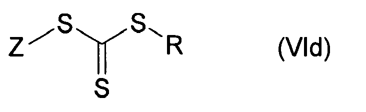 worin
Z die zuvor für die allgemeine Formel (VI) genannten Bedeutungen besitzt, allerdings mit der Einschränkung, dass Z nach homolytischer Spaltung der S-Z Bindung ein **primäres Radikal** ausbildet, und
R die gleichen Bedeutungen wie Z in der allgemeinen Formel (VI) besitzen kann, allerdings mit der Einschränkung, dass R nach homolytischer Spaltung der S-R Bindung entweder ein sekundäres, tertiäres oder aromatisch stabilisiertes Radikal ausbildet, und
mit der zusätzlichen Maßgabe, dass Z und R verschiedene Bedeutungen annehmen.

Dieser bevorzugte Regler der allgemeinen Formel (VId) ergibt sich aus dem Regler der allgemeinen Formel (VI) wobei
n und m jeweils = 0 sind,
t gleich 1 ist,
X für Schwefel steht,
Z die zuvor für die allgemeine Formel (VI) genannten Bedeutungen besitzt, allerdings mit der Einschränkung, dass Z nach homolytischer Spaltung der S-Z Bindung ein **primäres Radikal** ausbildet, und
R die gleichen Bedeutungen wie Z in der allgemeinen Formel (VI) besitzen kann, allerdings mit der Einschränkung, dass R nach homolytischer Spaltung der S-R Bindung entweder ein sekundäres, tertiäres oder aromatisch stabilisiertes Radikal ausbildet.

Bei diesen besonders bevorzugten Reglern der allgemeinen Formel (VId) handelt es sich somit um asymmetrische Trithiocarbonate.

Besonders bevorzugt wird ein Regler der oben genannten allgemeinen Formel (VId), worin
**Z** mit der Maßgabe, dass Z nach homolytischer Spaltung der S-Z Bindung ein primäres Radikal bildet, H, einen linearen oder verzeigten, gesättigten oder ein- oder mehrfach ungesättigten, optional ein- oder mehrfach substituierten Alkylrest, ganz besonders bevorzugt einen entsprechenden C₁-C₁₆ Alkylreste, insbesondere Methyl, Ethyl, n-Prop-1-yl, But-2-en-1-yl, n-Pent-1-yl, n-Hex-1-yl oder n-Dodecan-1-yl, Aralkyl, ganz besonders bevorzugt C₇-C₂₅-Aralkyl, insbesondere Benzyl, Amino, Amido, Carbamoyl, Hydroxyimino, Alkoxy, Aryloxy, F, Cl, Br, I, Hydroxy, Alkylthio, Arylthio, Carbonyl, Carboxy, Oxo, Thioxo, Cyanate, Thiocyanate, Isocyanate, Thioisocyanate, Isocyanide oder Salze der genannten Verbindungen bedeutet und
**R** mit der Maßgabe, dass R nach homolytischer Spaltung der S-R Bindung entweder ein sekundäres, tertiäres oder aromatisch stabilisiertes Radikal ausbildet,
- für einen linearen, verzeigten oder cyclischen, gesättigten oder ein- oder mehrfach ungesättigten, optional ein- oder mehrfach substituierten Alkylrest steht, bevorzugt einen entsprechenden C₃-C₂₀-Alkylrest, insbesondere für sec.-Butyl, tert.-Butyl, iso-Propyl, 1-Buten-3-yl, 2-Chloro-l-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ungesättigten, optional ein- oder mehrfach substituierten Carbo- oder Heterocyclylrest steht, inbesondere für Cyclohexyl, Cumyl oder Cyclohexan-1-nitril-1-yl,
- für einen Arylrest oder Heteroarylrest steht, ganz besonders bevorzugt für einen C₆-C₂₄-Arylrest, inbesondere Phenyl, Pyridinyl oder Anthracenyl,
- für einen Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen steht.

### Dithioester:

In einer weiteren bevorzugten Ausführungsform wird mindestens ein **Regler der allgemeinen Formel** (**VIe**) eingesetzt, 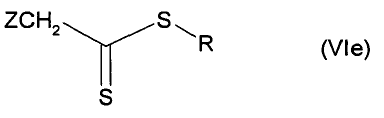 worin
Z alle für die allgemeine Formel (VI) gennanten Bedeutungen besitzen kann und
R die gleichen Bedeutungen wie Z in der allgemeinen Formel (VI) besitzen kann, allerdings mit der Einschränkung, dass R nach homolytischer Spaltung der S-R Bindung entweder ein sekundäres, tertiäres oder aromatisch stabilisiertes Radikal ausbildet.

Dieser bevorzugte Regler der allgemeinen Formel (VIe) ergibt sich aus dem Regler der allgemeinen Formel (VI), wobei
n und m jeweils = 0 sind,
t gleich 1 ist,
X für CH₂ steht,
Z die zuvor für die allgemeine Formel (VI) genannten Bedeutungen besitzt und
R die gleichen Bedeutungen wie Z in der allgemeinen Formel (VI) besitzen kann, allerdings mit der Einschränkung, dass R nach homolytischer Spaltung der S-R Bindung entweder ein sekundäres, tertiäres oder aromatisch stabilisiertes Radikal ausbildet.

Besonders bevorzugt wird ein Regler der oben genannten allgemeinen Formel (VIe), worin
R mit der Maßgabe, dass R nach homolytischer Spaltung der S-R Bindung entweder ein sekundäres, tertiäres oder aromatisch stabilisiertes Radikal ausbildet,
- für einen linearen oder verzeigten, gesättigten oder ein- oder mehrfach ungesättigten, optional ein- oder mehrfach substituierten Alkylrest steht, bevorzugt einen entsprechenden C₃-C₂₀ Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ungesättigten,optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)Arylrest, inbesondere Phenyl, Pyridinyl oder Anthracenyl,
- für einen (Hetero)Arylalkylrest steht, ganz besonders bevorzugt für einen C₇-C₂₅-(Hetero)Arylalkylrest, insbesondere für Benzyl, Phenylethyl oder 1-Methyl-1-phenyleth-2-yl, oder
- für Thiocarboxy, Carbonyl, Carboxy, Oxo, Thioxo, Epoxy, sowie Salze der genannten Verbindungen steht.

Alle vorgenannten Regler sind nach Methoden, die dem Fachmann aus dem Stand der Technik geläufig sind, synthetisierbar. Synthesevorschriften und weitere Verweise für Herstellvorschriften können beispielsweise aus Polymer 49 (2008) 1079-1131 sowie allen die in dieser Anmeldung als Stand der Technik bereits genannten Schutzrechten und Literaturstellen entnommen werden. Eine Reihe der Regler sind auch bereits käuflich erhältlich.

Besonders geeignet sind als Regler für das erfindungsgemäße Verfahren Dodecylpropansäuretrithiocarbonat (DoPAT), Dibenzoyltrithiocarbonat (DiBenT), Cumylphenyldithioacetat (CPDA), Cumyldithiobenzoat, Phenylethyldithiobenzoat, Cyanoisopropyldithiobenzoat, 2-Cyanoethyldithiobenzoat, 2-Cyanoprop-2-yl-dithiophenylacetat, 2-Cyanoprop-2-yl-dithiobenzoat, S-Thiobenzoyl-1H,1H, 2-Keto-3-oxa-4H,4H,5H,5H-perfluoroundecanthiol und S-Thiobenzoyl-1-phenyl-2-keto-3-oxa-4H, 4H, 5H, 5H-perfluoroundecanthiol.

Üblicherweise werden 5 bis 2000 mol% des Reglers bezogen auf 1 mol des Initiators eingesetzt. Bevorzugt werden 20 bis 1000 mol% des Reglers bezogen auf 1 mol des Initiators eingesetzt.

### INITIATOREN:

Bei dem erfindungsgemäßen Verfahren handelt es sich um eine radikalische Polymerisation. Auf welche Weise diese initiiert wird, ist dabei nicht kritisch, insofern kommt eine Initiierung durch peroxidische Initiatoren, Azo-Initiatoren, Redox-Systeme oder auf photochemischem Weg in Frage. Unter diesen Initiatoren sind die Azo-Initiatoren bevorzugt.

Als **Azo-Initiatoren** können beispielsweise die folgenden Verbindungen eingesetzt werden: 2,2'-Azobis(isobutyronitril), 2,2'-Azobis(2-cyano-2-butan), Dimethyl-2,2'-azobisdimethyl-isobutyrat, 4,4'-Azobis(4-cyanopentansäure), 1,1-Azobis(cyclohexancarbonitril), 2-(t-Butylazo)-2-cyanopropan, 2,2'-Azobis[2-methyl-N-(1,1)-bis(hydroxymethyl)-2-hydroxyethyl] propionamid, 2,2'-Azobis[2-methyl-N-hydroxyethyl]-propionamid, 2,2'-Azobis(N,N-dimethylenisobutyr-amidine) dihydrochlorid, 2,2'-Azobis(2-amidinopropan)dihydrochlorid, 2,2'-Azobis(N,N'-dimethylenisobutyramin), 2,2'-Azobis(2-methyl-N-[1,1-bis(hydroxymethyl)-2-hydroxyethyl] propionamid), 2,2'-Azo-bis(2-methyl-N-[1,1-bis(hydroxymethyl)ethyl]propionamid), 2,2'-Azobis[2-methyl-N-(2-hydroxyethyl)propionamid], 2,2'-Azobis(isobutyramid)dihydrat, 2,2'-Azobis(2,2,4-trimethylpentan) und 2,2'-Azobis(2-methylpropan).

Üblicherweise werden die Azo-Initiatoren in einer Menge 10⁻⁴ bis 10⁻¹ mol/l, bevorzugt in einer Menge von 10⁻³ bis 10⁻² mol/l eingesetzt. Durch Abstimmung des Verhältnisses der eingesetzten Initiatormenge zur Menge des verwendeten Reglers gelingt es, sowohl die Reaktionskinetik als auch die Molekularstruktur (Molekulargewicht, Polydispersität) gezielt zu beeinflussen.

Als **peroxidische Initiatoren** können beispielsweise die folgenden Peroxo-Verbindungen, die eine -O-O-Einheit aufweisen, eingesetzt werden: Wasserstoffperoxid, Peroxodisulfate, Peroxodiphosphate, Hydroperoxide, Persäuren, Persäureester, Persäureanhydride und Peroxide mit zwei organischen Resten. Als Salze der Peroxodischwefelsäure und der Peroxodiphosphorsäure können Natrium-, Kalium- und Ammoniumsalze eingesetzt werden. Geeignete Hydroperoxide sind z.B. t-Butylhydroperoxid, Cumolhydroperoxid, Pinanhydroperoxid und p-Menthanhydroperoxid. Geeignete Peroxide mit zwei organischen Resten sind Dibenzoylperoxid, 2,4-Dichlorbenzoylperoxid, Di-t-butylperoxid, Dicumylperoxid, t-Butylperbenzoat, t-Butylperacetat. Bevorzugt wird p-Menthanhydroperoxid oder Pinanhydroperoxid eingesetzt.

In einer alternativen Ausführungsform werden Azo- oder peroxidische Initiatoren mit einer verlängerten Zerfallszeit eingesetzt. Hierbei hat es sich bewährt, den Azoinitiator bzw. den peroxidischen Initiator so zu wählen, dass bei einer Temperatur von 70°C bis 200 °C, bevorzugt 80 °C bis 175 °C und besonders bevorzugt 90 °C bis 150 °C, die Halbwertszeit des jeweiligen Initiators im gewählten Lösungsmittel 10 Stunden oder mehr als 10 Stunden beträgt. Bevorzugt sind dabei Azoinitatoren, die bei einer Temperatur von 70°C bis 200 °C, bevorzugt 80 °C bis 175 °C und besonders bevorzugt 90 °C bis 150 °C, eine Halbwertszeit von 10 Stunden oder mehr als 10 Stunden im gewählten Lösungsmittel besitzen. Besonders bevorzugt werden Azoinitatoren der folgenden Strukturformeln (Ini-1)- (Ini-5) eingesetzt:

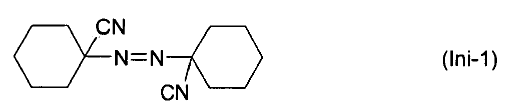

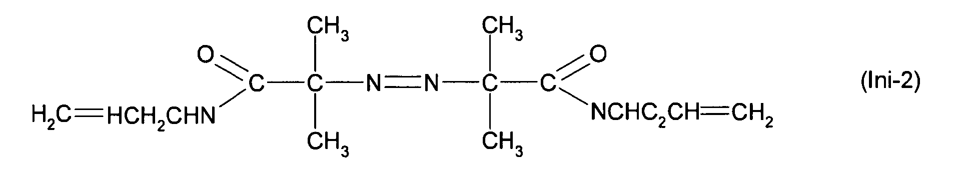

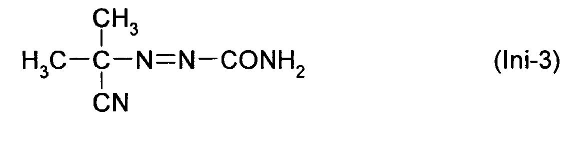

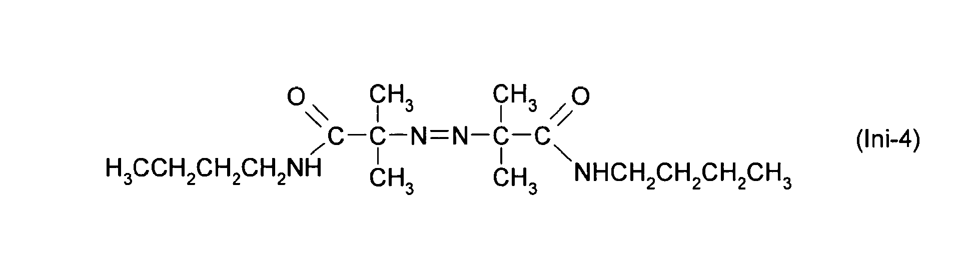

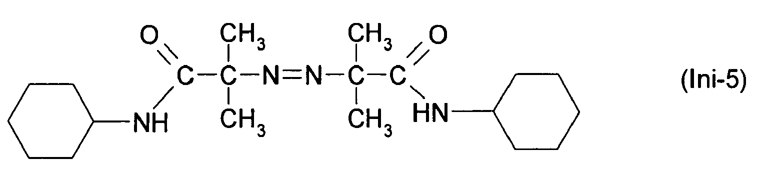

Ganz besonders bevorzugt ist der Einsatz des Initiators der Formel (Ini-3)

Die vorgenannten Azoinitiatoren der Strukturformeln (Ini-1) - (Ini-5) sind käuflich erhältlich, beispielsweise von Wako Pure Chemical Industries, Ltd..

Bei Einsatz der vorgenannten bevorzugten Azoinitiatoren lassen sich Nitrilkautschuke mit vergleichsweise höheren mittleren Molekulargewichten Mw (Gewichtsmittel des Molekulargewichts) und Mn (Zahlenmittel des Molekulargewichts) synthetisieren, die sich gleichzeitig weiterhin durch eine hohe Linearität auszeichnen. Dies kommt zum Ausdruck durch entsprechend niedrige Werte der Mooney-Relaxation, gemessen durch ISO 289 Teil 1 & 2 oder alternativ nach ASTM D 1646.

Als **Redox-Systeme** können die folgenden Systeme aus einem Oxidationsmittel und einem Reduktionsmittel eingesetzt werden. Die Wahl geeigneter Mengen an Oxidations- und Reduktionsmittel ist dem Fachmann hinreichend geläufig.

Bei der Verwendung von Redoxsystemen verwendet man häufig zusätzlich Salze von Übergangsmetallverbindungen wie Eisen, Cobalt oder Nickel in Kombination mit geeigneten Komplexbildnern wie Natrium-Ethylendiamintetraacetat, Natrium-Nitrilotriacetat sowie Trinatriumphosphat oder Tetrakaliumdiphosphat.

Als **Oxidationsmittel** können dabei beispielsweise alle Peroxoverbindungen, die zuvor für die **peroxidischen Initiatoren** genannt wurden, eingesetzt werden.

Als **Reduktionsmittel** können im erfindungsgemäßen Verfahren beispielsweise die folgenden eingesetzt werden: Natriumformaldehydsulfoxylat, Natriumbenzaldehydsulfoxylat, reduzierende Zucker, Ascorbinsäure, Sulfenate, Sulfinate, Sulfoxylate, Dithionit, Sulfit, Metabisulfit, Disulfit, Zucker, Harnstoff, Thioharnstoff, Xanthogenate, Thioxanthogenate, Hydraziniumsalzen, Amine und Aminderivate wie Anilin, Dimethylanilin, Monoethanolamin, Diethanolamin oder Triethanolamin. Bevorzugt wird Natriumformaldehydsulfoxylat eingesetzt.

Die Initiierung der radikalischen Polymerisation kann auch **photochemisch** wie im Folgenden beschrieben erfolgen: Hierzu wird dem Reaktionsgemisch ein Photoinitiator zugesetzt, welcher durch Bestrahlung mittels Licht geeigneter Wellenlänge angeregt wird und eine radikalische Polymerisation initiiert. Es ist hierbei anzumerken, dass für die optimale Initiierung der radikalischen Polymerisation die Bestrahlungsdauer von der Leistung des Strahlers, von dem Abstand zwischen dem Strahler und dem Reaktionsgefäß sowie von der Bestrahlungsfläche abhängig ist. Es ist jedoch für den Fachmann ohne weiteres durch verschiedene Testreihen möglich, die optimale Bestrahlungsdauer herauszufinden. Auch die Wahl der geeigneten Inititatormenge ist für den Fachmann ohne Probleme möglich und dient zur Beeinflussung des Zeit-Umsatz-Verhaltens der Polymerisation.

Als photochemische-Initiatoren können beispielsweise die Folgenden eingesetzt werden: Benzophenon, 2-Methylbenzophenon, 3,4-Dimethylbenzophenon, 3-Methylbenzophenon, 4,4'-Bis(diethylamino)benzophenon, 4,4'-Di-hydroxybenzophenon, 4,4'-Bis[2-(1-propenyl)phenoxy]benzophenon, 4-(Diethylamino)benzophenon, 4-(Dimethylamino)benzophenon, 4-Benzoylbiphenyl, 4-Hydroxybenzophenon, 4-Methylbenzophenon, Benzophenon-3,3',4,4'-tetracar.boxyld,1,an,hydrid, 4,4'-Bis(dimethylamino)benzophenon, Acetophenon, 1-Hydroxycyclohexylphenylketon, 2,2-Diethoxyacetophenon, 2,2-Dimethoxy-2-phenylacetophenon, 2-Benzyl-2-(dimethylamino)-4'-morpholino-butyrophenon, 2-Hydroxy-2-methylpropiophenon, 2-Hydroxy-4'-(2-hydroxyethoxy)-2-methytpropiophenon, 3 '-Hydroxyacetophenon, 4'-Ethoxyacetophenon, 4'-Hydroxyacetophenon, 4'-Phenoxyacetophenon, 4'-tert-Butyl-2',6'-dimethylacetophenon, 2-Methyl-4'-(methylthio)-2-morpholinopropiophenon, Diphenyl-(2,4,6-trimethylbenzoyl)-phosphinoxid, Phenylbis(2,4,6-trimethylbenzoyl)phosphinoxid, Methylbenzoylformat, Benzoin, 4,4'-Dimethoxybenzoin, Benzoinmethylether, Benzoinethylether, Benzoinisopropylether, Benzoinisobutylether, 4,4'-Dimethylbenzil, Hexa-chlorocyclopentadiene oder Kombinationen daraus.

### LÖSUNGSMITTEL:

Das erfindungsgemäße Verfahren wird in einem organischen Lösungsmittel durchgeführt. Große Mengen Wasser, wie im Fall der Emulsionspolymerisation sind somit nicht im Reaktionssystem vorhanden. Geringere Mengen Wasser in der Größenordnung von bis zu 5 Gew.%, bevorzugt bis 1 Gew.% (bezogen auf die Menge des organischen Lösungsmittels) können durchaus im Reaktionssystem zugegen sein. Entscheidend ist, dass die Mengen anwesenden Wassers so gering gehalten werden muss, dass es nicht zu einer Ausfällung des sich bildenden NBR-Polymers kommt. Es sei an dieser Stelle klar gestellt, dass es sich bei dem erfindungsgemäßen Verfahren nicht um eine Emulsionspolymerisation handelt.

Als organische Lösungsmittel geeignet sind beispielsweise Dimethylacetamid, Monochlorbenzol, Toluol, Ethylacetat und Methylethylketon. Bevorzugt sind polare Lösungsmittel, welche einen Hildebrand'schen Lösungsparameter δ (δ = ((Δᵥ-RT)/Vₘ)^{½} [(MPa)^{½}]) (Vₘ = molares Volumen; ΔH_{V} = Verdampfungsenthalpie; R = ideale Gaskonstante)) in einem Bereich zwischen 15,5 und 26 (MPa)^{½} besitzen.

Einsetzbar sind auch Dimethylcarbonat, 1,4-Dioxan und Toluol.

Ausschlaggebend für die Eignung eines Lösungsmittels ist, dass der hergestellte Nitrilkautschuk bei der Reaktionstemperatur, die sich üblicher Weise im unten angegebenen Bereich bewegt, vollständig in Lösung bleibt. Nicht eingesetzt werden können Lösungsmittel, die als Transferreagenzien in die Reaktion eingreifen, z.B. Tetrachlorkohlenstoff, Thiole und weitere dem Fachmann als solche bekannte Solventien dieser Art.

Ebenfalls möglich ist es, ein Gemisch von zwei oder mehr organischen Lösungsmitteln einzusetzen.

Möglich ist es auch, Lösungsmittel einzusetzen, die den og. Anforderungen genügen und einen Siedepunkt besitzen, der unterhalb desjenigen von Acrylnitril liegt, wie z.B. Methyl-tert.butylether (MTBE).

### TEMPERATUR:

Das erfindungsgemäße Verfahren wird üblicher Weise bei einer Temperatur in einem Bereich von 60 bis 150°C durchgeführt, bevorzugt in einem Bereich von 70 bis 130°C, besonders bevorzugt in einem Bereich von 80 bis 120°C und insbesondere in einem Bereich von 90 bis 110°C. Wird die Temperatur noch tiefer gewählt, ist die Polymerisation entsprechend verlangsamt. Bei noch deutlich höheren Temperaturen ist es nicht ausgeschlossen, dass der eingesetzte Initiator zu schnell zerfällt bzw. das RAFT-Agens zersetzt wird. Insbesondere beim Einsatz peroxidischer Initiatoren ist es nicht ausgeschlossen, dass es u.U. zur Oxidation des Reglers kommt.

### UMSETZUNG:

Im Fall der Initiierung durch Peroxoverbindungen oder Azo-Initiatoren erfolgt die Durchführung des erfindungsgemäßen Verfahrens üblicherweise so, dass das α,β-ungesättigte Nitril und die optional eingesetzten weiteren copolymerisierbaren Monomere, das Lösungsmittel, der Initiator sowie der/die Regle rin einem Reaktionsgefäß vorgelegt werden und anschließend das oder die konjugierte Diene zudosiert wird/werden. Die Polymerisation wird im Anschluss durch Temperaturerhöhung gestartet.

Im Falle einer Initiierung mittels eines Redox-Systems wird typischerweise das Oxidationsmittel zusammen mit einem der Monomeren in das Reaktionsgefäß dosiert. Die Polymerisation wird im Anschluss durch Zusatz des Reduktionsmittels gestartet.

Um spezielle Verhältnisse der jeweiligen Monomeren im Co-/Terpolymer zu erhalten, ist es sinnvoll und dem Fachmann durchweg geläufig, entsprechende Modifikationen bezüglich der Dosierung vorzunehmen (z.B. durch Nachdosieren des jeweiligen Monomers oder auch durch Nachdosieren von Initiator-Mengen). Die Nachdosierung der Monomere oder aber die Nachdosierung von Initiator kann dabei entweder kontinuierlich oder aber auch in einzelnen Portionen diskontinuierlich erfolgen.

### Nitrilkautschuke:

Bereitgestellt werden durch das neue Polymerisationsverfahren Nitrilkautschuke, die gegebenenfalls hydriert sind, enthaltend
(i) Wiederholungseinheiten abgeleitet von mindestens einem konjugierten Dien, mindestens einem α,β-ungesättigten Nitril und gegebenenfalls einem oder mehreren weiteren copolymerisierbaren Monomeren sowie
(ii) ein oder mehrere Strukturelemente der allgemeinen Formeln (I), (II), (III), (IV) oder (V) 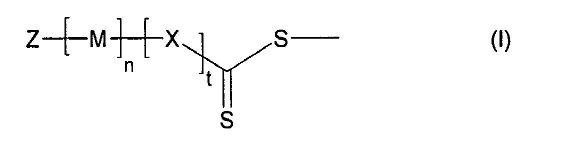 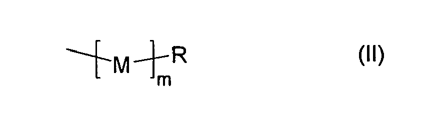 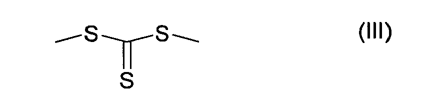 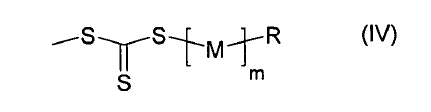 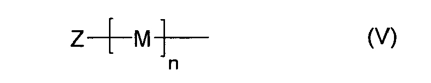
wobei
**Z** für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Hydroxyimino, Carbamoyl, Alkoxycarbonyl, F, Cl, Br, I, Hydroxy, Phosphonato, Phosphinato, Alkylthio, Arylthio, Sulfanyl, Thiocarboxy, Sulfinyl, Sulfono, Sulfino, Sulfeno, Sulfonsäuren, Sulfamoyl, Silyl, Silyloxy, Nitril, Carbonyl, Carboxy, Oxycarbonyl, Oxysulfonyl, Oxo, Thioxo, Borate, Selenate, Epoxy, Cyanate, Thiocyanate, Isocyanate, Thioisocyanate und Isocyanide,
**M** für Wiederholungseinheiten eines oder mehrerer, ein- oder mehrfach ungesättigter Monomeren steht, umfassend konjugierte oder nicht-konjugierte Diene, Alkine und Vinylverbindungen, oder für ein Strukturelement, welches sich ableitet Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide,
**n und m** gleich oder verschieden sind und jeweils im Bereich von 0 bis 10.000 liegen,
**t** 0 oder 1 ist, sofern n= 0, und gleich 1 ist, sofern n ≠ 0,
**X** für C(Z₂), N(Z), P(Z), P(=O)(Z), O, S, S(=O) oder S(=O)₂ steht, wobei Z in diesen Resten die gleiche-Bedeutungen-besitzen-kann, wie zuvor ausgeführt und
**R** (a) für den Fall, dass m ≠ 0 ist, die gleichen Bedeutungen besitzen kann wie der Rest Z und (b) für den Fall, dass m = 0 ist, für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Carbamoyl, Alkoxy, Aryloxy, Alkylthio, Arylthio, Sulfanyl, Thiocarboxy, Sulfmyl, Sulfono, Sulfino, Sulfeno, Sulfonsäuren, Sulfamoyl, Carbonyl, Carboxy, Oxycarbonyl, Oxysulfonyl, Oxo, Thioxo, Epoxy, Cyanate, Thiocyanate, Isocyanate, Thioisocyanate oder Isocyanide steht.

Die in den vorgenannten Resten Z und R genannten Bedeutungen können jeweils ein- oder mehrfach substituiert sein. Hier gilt identisch das bereits für die allgemeine Formel (VI) zu Z und R ausgeführte. Auch die zur allgemeinen Formel (VI) gemachten Ausführungen bezüglich des Einschluss einiger Bedeutungen für Z und R (in Form von Salzen der genannten Reste, von organometallischen Salzen, als Liganden für metallorganische Komplexverbindungen sowie die Anbindung über Linker an Festphasen bzw. Trägersubstanzen) gelten identisch für Z und R in den allgemeinen Strukturelementen (I)-(V). Auch die zur allgemeinen Formel (VI) gemachten Ausführungen bezüglich der optionalen Substitution der sich hinter M verbergenden Bedeutungen gilt identisch für das allgemeine Strukturelement (I), (II), (IV) und (V).

Bevorzugt sind gegebenenfalls hydrierte Nitrilkautschuke, die als allgemeine Strukturelemente (ii) 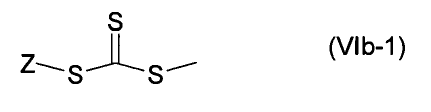 und

-R (VIb-2)

enthalten, worin
Z die zuvor für die allgemeine Formel (I) genannten Bedeutungen besitzt und
R die zuvor für die allgemeine Formel (I) genannten Bedeutungen besitzt, allerdings mit der Einschränkung, dass R nach homolytischer Spaltung der Bindung zum nächsten gebundenen Atom im Nitrilkautschuk entweder ein sekundäres, tertiäres oder aromatisch stabilisiertes Radikal ausbildet.

Es hat sich insbesondere bewährt, dass Z und R hierbei verschieden sind.

Diese Strukturelemente sind in den Nitrilkautschuken als Endgruppen enthalten und ergeben sich bei Einsatz der bevorzugten Regler der allgemeinen Formel (IVb).

Besonders bevorzugt sind Nitrilkautschuke, die als allgemeine Strukturelemente (ii) die Endgruppe (VIb-1) und (VIb-2) enthalten, worin R mit der Maßgabe, dass R nach homolytischer Spaltung der Bindung zum nächsten gebundenen Atom entweder ein sekundäres, tertiäres oder aromatisch stabilisiertes Radikal ausbildet,
- für einen linearen oder verzweigten, gesättigten oder ein- oder mehrfach ungesättigten, optional ein-oder mehrfach substituierten Alkylrest steht, bevorzugt für einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ein- oder mehrfach ungesättigten, optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)arylrest, inbesondere für Phenyl, Pyridinyl oder Anthracenyl,
- für einen (Hetero)Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen steht.

Besonders bevorzugt sind gegebenenfalls hydrierte Nitrilkautschuke, die als allgemeine Strukturelemente (ii) 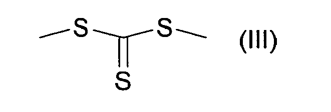 und

-R (II')

und/oder

-Z (I')

aufweisen, wobei
Z die gleichen Bedeutungen aufweisen kann wie in der allgemeinen Formel (I) und
R die gleichen Bedeutungen aufweisen kann wie in der allgemeinen Formel (II) für m=0, und
Rund Z gleich oder verschieden sind, allerdings jeweils mit der Maßgabe, dass R und Z nach homolytischer Spaltung ihrer Bindung zum jeweils nächsten Atom im optional hydrierten Nitrilkautschuk jeweils ein sekundäres, tertiäres oder aromatisch stabilisiertes Radikal ausbilden.

Gegebenenfalls hydrierte Nitrilkautschuke mit den vorgenannten allgemeinen Strukturelementen (ii) werden erhalten, wenn als Regler eine Verbindung der allgemeinen Strukturformel (IVb) eingesetzt wird, worin Z die gleichen Bedeutungen besitzt wie in der allgemeinen Formel (IV) und R die gleichen Bedeutungen besitzt wie in der allgemeinen Formel (IV) für die Variante b) mit m=0, und R und Z gleich oder verschieden sind, allerdings jeweils mit der Maßgabe, dass R und Z nach homolytischer Spaltung ihrer Bindung zum nächstgelegenen Schwefel im Regler jeweils ein sekundäres, tertiäres oder aromatisch stabilisiertes Radikal ausbilden.

Besonders bevorzugt sind gegebenenfalls hydrierte Nitrilkautschuke, die als allgemeinen Strukturelemente (ii) die Elemente (III) und (II') und/oder (I') enthalten, worin
R und Z gleich oder verschieden sind und mit der Maßgabe, dass R und Z nach homolytischer Spaltung der Bindung zum jeweils nächsten gebundenen Atom jeweils ein sekundäres, tertiäres oder aromatisch stabilisiertes Radikal ausbilden,
- für einen linearen oder verzweigten, gesättigten oder ein- oder mehrfach ungesättigten, optional ein- oder mehrfach substituierten Alkylrest stehen, bevorzugt für einen entsprechenden C₃-C₂₀-Alkylrest, insbesondere für sec.-Butyl, tert.-Butyl, iso-Propyl, 1-Buten-3-y 1, 2-Chloro-1-buten-2-yl, Propionsaeure-2-yl, Propionitril-2-yl, 2-Methylpropannitril-2-y 1, 2-Methylpropionsaeure-2-yl oder 1H,1H,2-Keto-3-oxo-4H,4H,5H,5H-perfluorundecanyl, oder
- für einen gesättigten oder ein- oder mehrfach ungesättigten, optional ein- oder mehrfach substituierten Carbo- oder Heterocyclylrest stehen, inbesondere für Cyclohexyl, Cumyl oder Cyclohexan-1-nitril-1-yl,
- für einen (Hetero)Arylrest stehen, ganz besonders bevorzugt für einen C₆-C₂₄-(Hetero)arylrest, inbesondere für Phenyl, Pyridinyl oder Anthracenyl,
- für einen (Hetero)Aralkylrest stehen, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen stehen.

Bevorzugt sind gegebenenfalls hydrierte Nitrilkautschuke, die als allgemeine Strukturelemente (ii) 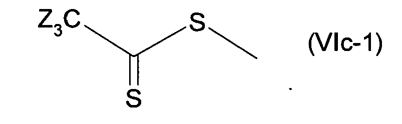 und

-R (VIc-2)

enthalten, worin
Z die zuvor für die allgemeine Formel (I) genannten Bedeutungen besitzt,
R die zuvor für die allgemeine Formel (II) genannten Bedeutungen besitzt, allerdings mit der Einschränkung, dass R nach homolytischer Spaltung der Bindung zum nächsten Atom im gegebenenfalls hydrierten Nitrilkautschuk ein sekundäres, tertiäres oder aromatisch stabilisiertes Radikal ausbildet.

Diese Strukturelemente sind in den optional hydrierten Nitrilkautschuken als Endgruppen enthalten und ergeben sich bei Einsatz der bevorzugten Regler der allgemeinen Formel (VIc).

Besonders bevorzugt sind gegebenenfalls hydrierte Nitrilkautschuke, die als allgemeine Strukturelemente (ii) die Strukturelemente (VIc-1) und (VIc-2) enthalten, worin
R mit der Maßgabe, dass R nach homolytischer Spaltung der Bindung zum nächsten Atom im gegebenenfalls hydrierten Nitrilkautschuk ein sekundäres, tertiäres oder aromatisch stabilisiertes Radikal ausbildet.,
- für einen linearen oder verzweigten, gesättigten oder ein- oder mehrfach ungesättigten, optional ein- oder mehrfach substituierten Alkylrest steht, bevorzugt für einen entsprechenden C₃-C₂₀-Alkylrest insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ein- oder mehrfach ungesättigten, optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)arylest, inbesondere für Phenyl, Pyridinyl oder Anthracenyl,
- für einen (Hetero)Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen steht.

Das konjugierte Dien im Nitrilkautschuk kann von jeder Natur sein. Bevorzugt werden (C₄-C₆) konjugierte Diene eingesetzt. Besonders bevorzugt sind 1,2-Butadien, 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als α,β-ungesättigtes Nitril kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Ein besonders bevorzugter Nitrilkautschuk ist ein Copolymer aus Acrylnitril und 1,3-Butadien.

Als weitere copolymerisierbare Termonomere können beispielsweise aromatische Vinylmonomere, bevorzugt Styrol, α-Methylstyrol und Vinylpyridin, **fluorhaltige Vinylmonomere**, bevorzugt Fluorethylvinylether, Fluorpropylvinylet h e r, o-Fluormethylstyrol, Vinylpentafluorbenzoat, Difluoroethylen und Tetrafluoroethylen, oder auch **copolymerisierbare Antiageing Monomere**, bevorzugt N-(4-anilinophenyl) acrylamid, N-(4-anilinophenyl) methacrylamid, N-(4-anilinphenyl) cinnamide, N-(4-anilinophenyl) crotonamid, N-phenyl-4-(3-vinylbenzyloxy) anilin und N-phenyl-4-(4-vinylbenzyloxy) anilin eingesetzt werden sowie **nicht-konjugierte Diene**, wie 4-Cyanocyclohexen und 4-Vinylcyclohexen, oder auch **Alkine**, wie 1- oder 2-Butin.

Alternativ können als weitere copolymerisierbare Termonomere carboxygruppenhaltige, copolymerisierbare Termonomere eingesetzt werden, beispielsweise a,β-ungesättigte Monocarbonsäuren, deren Ester, α,β-ungesättigte Dicarbonsäuren, deren Mono- oder -Diester oder um deren entsprechenden Anhydride oder Amide.

Als **α,β-ungesättigte Monocarbonsäuren** können bevorzugt Acrylsäure und Methacrylsäure eingesetzt werden.

Einsetzbar sind auch **Ester der** α,β**-ungesättigten Monocarbonsäuren**, bevorzugt deren Alkylester und Alkoxyalkylester. Bevorzugt sind die Alkylester, insbesondere C₁-C₁₈ Alkylester der α,β-ungesättigten Monocarbonsäuren. Besonders bevorzugt sind Alkylester, insbesondere C₁-C₁₈ Alkylester der Acrylsäure oder der Methacrylsäure, insbesondere Methylacrylat, Ethylacrylat, Propylacrylat, n-Butylacrylat, tert.-Butylacrylat, 2-Ethylhexylacrylat, n-Dodecylacrylat, Methylmethacrylat, Ethylmethacrylate, Butylmethacrylat und 2-Ethylhexyl-methacrylat. Bevorzugt sind auch Alkoxyalkylester der α,β-ungesättigten Monocarbonsäuren, besonders bevorzugt Alkoxyalkylester der Acrylsäure oder der Methacrylsäure, insbesondere C₂-C₁₂-Alkoxyalkylester der Acrylsäure oder der Methacrylsäure, ganz besonders bevorzugt Methoxymethylacrylat, Methoxyethyl(meth)acrylat, Ethoxyethyl(meth)acrylat und Methoxymethyl-(meth)acrylat. Einsetzbar sind auch Mischungen von Alkylestern, wie z.B. den vorgenannten, mit Alkoxyalkylestern, z.B. in Form der vorgenannten. Einsetzbar sind auch Cyanoalkylacrylate and Cyanoalkylmethacrylate, in denen die C-Atom-Zahl der Cyanoalkylgruppe 2-12 beträgt, vorzugsweise α-Cyanoethylacrylat, β-Cyanoethylacrylat und Cyanobutylmethacrylat. Einsetzbar sind auch Hydroxyalkylacrylate and Hydroxyalkyhnethacrylate, in denen die C-Atom-Zahl der Hydroxyalkylgruppen 1-12 beträgt, vorzugsweise 2-Hydroxyethylacrylat, 2-Hydroxyethylmethacrylat und 3-Hydroxypropylacrylat; Einseztbar sind auch Fluor-substituierte Benzylgruppenhaltige Acrylate oder Methacrylate, vorzugsweise Fluorobenzylacrylate, und Fluorobenzylmethacrylat. Einsetzbar sind auch Fluoroalkylgruppen haltige Acrylate und -Methacrylate, vorzugsweise Trifluoroethylacrylat und Tetrafluoropropylmethacrylat. Einsetzbar sind auch Aminogruppenhaltige α,β-ungesättigte Carbonsäureester wie Dimethylaminomethyl-acrylat und Diethylaminoethylacrylat.

Als weitere copolymerisierbare Monomere können ferner α,β**-ungesättigte Dicarbonsäuren**, bevorzugt Maleinsäure, Fumarsäure, Crotonsäure, Itaconsäure, Citraconsäure und Mesaconsäure, eingesetzt werden.

Eingesetzt werden können ferner α,β**-ungesättigte Dicarbonsäureanhydride**, bevorzugt Maleinsäureanhydrid, Itaconsäureanhydrid, Citraconsäureanhydrid und Mesaconsäureanhydrid.

Eingesetzt werden können ferner **Mono- oder Diester von α,β-ungesättigten Dicarbonsäuren**.

Bei diesen α,β-ungesättigten Dicarbonsäuremono- oder diestern kann es sich beispielsweise handeln um **Alkyl-**, bevorzugt C₁-C₁₀-Alkyl, insbesondere Ethyl-, n-Propyl-, iso-Propyl, n-Butyl-, tert.-Butyl, n-Pentyl- oder n-Hexyl-, **Alkoxyalkyl-**, bevorzugt C₂-C₁₂ Alkoxyalkyl-, besonders bevorzugt C₃-C₈- Alkoxyalkyl, **Hydroxyalkyl**, bevorzugt C₁-C₁₂ Hydroxyalkyl-, besonders bevorzugt C₂-C₈-Hydroxyalkyl, Cycloalkyl-, bevorzugt C₅-C₁₂-Cycloalkyl-, besonders bevorzugt C₆-C₁₂-Cycloalkyl, **Alkylcycloalkyl-**, bevorzugt C₆-C₁₂-Alkylcycloalkyl-, besonders bevorzugt C₇-C₁₀-Alkylcycloalkyl, **Aryl-**, bevorzugt C₆-C₁₄-Aryl-Mono- oder -Diester, wobei es sich im Fall der Diester jeweils auch um gemischte Ester handeln kann.

Besonders bevorzugte **Alkylester von** α,β**-ungesättigten Monocarbonsäuren** sind Methyl(meth)acrylat, -Ethyl(meth)acrylat, Propyl(meth)acrylat, n-Butyl(meth)acrylat, t-Butyl(meth)acrylat, Hexyl(meth)acrylat, 2-Ethylhexyl(meth)acrylat, Octyl(meth)acrylat, 2-Propylheptylacrylat und Lauryl(meth)acrylat. Insbesondere wird n-Butylacrylat eingesetzt.

Besonders bevorzugte **Alkoxyalkylester der** α,β**-ungesättigten Monocarbonsäuren** sind Methoxyethyl(meth)acrylat, Ethoxyethyl(meth)acrylat und Methoxymethyl(meth)acrylat. Insbesondere wird Methoxyethylacrylat eingesetzt.

Besonders bevorzugte **Hydroxyalkylester der** α,β**-ungesättigten Monocarbonsäuren** sind Hydroxyethyl(meth)acrylat, Hydroxypropyl-(meth)acrylat und Hydroxybutyl(meth)acrylat.

Als sonstige Ester der α,β-ungesättigten Monocarbonsäuren werden ferner beispielsweise Polyethylenglykol(meth)acrylat, Polypropylenglykol(meth)acrylat, Glycidyl(meth)acrylat, Epoxy(meth)acrylat, N-(2-Hydroxyethyl)acrylamide, N-(2-Hydroxymethyl)acrylamide und Urethan(meth)acrylat eingesetzt.

Beispiele von α,β**-ungesättigten Dicarbonsäuremonoestern** umfassen
- Maleinsäuremonoalkylester, bevorzugt Monomethylmaleat, Monoethylmaleat, Monopropyl maleat und Mono-n-butylmaleat;
- Maleinsäuremonocycloalkylester, bevorzugt Monocyclopentylmaleat, Monocyclohexyl maleat und Monocycloheptylmaleat;
- Maleinsäuremonoalkylcycloalkylester, bevorzugt Monomethylcyclopentylmaleat und Monoethylcyclohexylmaleat;
- Maleinsäuremonoarylester, bevorzugt Monophenylmaleat;
- Maleinsäuremonobenzylester, bevorzugt Monobenzylmaleat;
- Fumarsäuremonoalkylester, bevorzugt Monomethylfumarat, Monoethylfumarat, Monopropyl fumarat und Mono-n-butyl fumarat;
- Fumarsäuremonocycloalkylester, bevorzugt Monocyclopentylfumarat, Monocyclohexyl fumarat und Monocycloheptylfumarat;
- Fumarsäuremonoalkylcycloalkylester, bevorzugt Monomethylcyclopentylfumarat und Monoethylcyclohexylfumarat;
- Fumarsäuremonoarylester, bevorzugt Monophenylfumarat;
- Fumarsäuremonobenzylester, bevorzugt Monobenzylfumarat;
- Citraconsäuremonoalkylester, bevorzugt Monomethylcitraconat, Monoethylcitraconat, Monopropylcitraconat und Mono-n-butyl citraconat;
- Citraconsäuremonocycloalkylester, bevorzugt Monocyclopentylcitraconat, Monocyclohexyl citraconat und Monocycloheptylcitraconat;
- Citraconsäuremonoalkylcycloalkylester, bevorzugt Monomethylcyclopentylcitraconat und Monoethylcyclohexylcitraconat;
- Citraconsäuremonoarylester, bevorzugt Monophenylcitraconat;
- Citraconsäuremonobenzylester, bevorzgut Monobenzylcitraconat;
- Itaconsäuremonoalkylester, bevorzugt Monomethylitaconat, Monoethylitaconat, Monopropyl itaconat und Mono-n-butyl itaconat;
- Itaconsäuremonocycloalkylester, bevorzugt Monocyclopentylitaconat, Monocyclohexyl itaconat und Monocycloheptylitaconat;
- Itaconsäuremonoalkylcycloalkylester, bevorzugt Monomethylcyclopentylitaconat und Monoethylcyclohexylitaconat;
- Itaconsäuremonoarylester, bevorzugt Monophenylitaconat;
- Itaconsäuremonobenzylester, bevorzugt Monobenzylitaconat.
- Mesaconsäuremonoalkylester, bevorzugt Mesaconsäuremonoethylester;

Als **α,β-ungesättigte Dicarbonsäurediester** können die analogen Diester basierend auf den zuvor genannten Monoestergruppen eingesetzt werden, wobei es sich bei den Estergruppen auch um chemisch verschiedene handeln kann.

Es ist ferner möglich, als weitere copolymerisierbare Monomere radikalisch polymerisierbare Verbindungen einzusetzen, die pro Molekül zwei oder mehr olefinische Doppelbindungen enthalten. Beispiele solcher zwei oder mehrfach ungesättigter Verbindungen sind zwei- oder mehrfach ungesättigte Acrylate, Methacrylate oder Itaconate von Polyolen wie z.B. 1,6-Hexandioldiacrylat, 1,6-Hexandioldimethacrylat, Ethylenglykoldiacrylat, Ethylenglykoldimethacrylat (EGDMA), Diethylenglykoldimethacrylat, Triethylenglykoldiacrylat, Butandiol-1,4-diacrylat, Propandiol-1,2-diacrylat, Butandiol-1,3-dimethacrylat, Neopentylglykoldiacrylat, Trimethylolpropandiacrylat, Trimethylolpropandimethacrylat, Trimethylolethandiacrylat, Trimethylolethandimethacrylat, Trimethylolpropantriacrylat, Trimethylolpropantrimethacrylat (TMPTMA), Glycerindi- und - triacrylat, Pentaerythritdi-, -tri- und tetraacrylat oder -methacrylat, Dipentaerythrittetra, -penta- und -hexaacrylat oder -methacrylat oder -itaconat, Sorbittetraacrylat, Sorbithexamethacrylat, Diacrylate oder Dimethacrylate von 1,4-Cyclohexandiol, 1,4-Dimethylolcyclohexan, 2,2-Bis(4-hydroxyphenyl)propan, von Polyethylenglykolen oder von Oligoestern oder Oligourethanen mit endständigen Hydroxylgruppen. Als mehrfach ungesättigte Monomere können auch Acrylamide verwendet werden wie z.B. Methylen-bisacrylamid, Hexamethylen-1,6-bisacrylamid, Diethylentriamin-tris-methacrylamid, Bis(methacrylamido-propoxy)ethan oder 2-Acrylamidoethylacrylat. Beispiele für mehrfach ungesättigte Vinyl- und Allylverbindungen sind Divinylbenzol, Ethylenglykoldivinylether, Diallylphthalat, Allylmethacrylat, Diallylmaleat, Triallylisocyanurat oder Triallylphosphat.

Bei Einsatz derartiger Termonomere gelingt es vorteilhafterweise, die Polymerisation bis zu hohen Umsätzen zu führen und dabei Nitrilkautschuke herzustellen, die ein vergleichsweise höheres mittleres Molekulargewicht Mw (Gewichtsmittel) bzw. Mn (Zahlenmittel) aufweisen, jedoch trotzdem gelfrei sind.

Die Anteile an konjugiertem Dien und α,β-ungesättigtem Nitril in den erhaltenen NBR-Polymeren können in weiten Bereichen schwanken. Der Anteil des oder der Summe der konjugierten Diene liegt üblicherweise im Bereich von 40 bis 90 Gew.-%, bevorzugt im Bereich von 50 bis 85 Gew. %, bezogen auf das Gesamtpolymer. Der Anteil des oder der Summe der α,β-ungesättigten Nitrile liegt üblicherweise bei 10 bis 60 Gew.-%, bevorzugt bei 15 bis 50 Gew.-%, bezogen auf das Gesamtpolymer. Die Anteile der Monomere summieren sich jeweils zu 100 Gew.-% auf. Die zusätzlichen Monomere können je nach Art des/der Termonomere in Mengen von 0 bis 40 Gew.%, bezogen auf das Gesamtpolymer, vorliegen. In diesem Fall werden entsprechende Anteile des oder der konjugierten Diene und/oder des oder der α,β-ungesättigten Nitrile durch die Anteile der zusätzlichen Monomere ersetzt, wobei sich die Anteile aller Monomere jeweils zu 100 Gew.-% aufsummieren.

Soweit es sich bei den Termonomeren um solche Monomere handelt, die tertiaere Radikale bilden (z.B. Methacrylsäure), hat es sich bewährt, diese in Mengen von 0 bis 10 Gew.% einzusetzen.

Es ist anzumerken, dass die zuvor genannte Begrenzung der zusätzlichen Monomere auf max. 40% nur für die Konstellation gilt, dass die Gesamtmenge an Monomeren dem Polymerisationsansatz zu Beginn bzw. während der Reaktion zudosiert werden (also zur Erzeugung statistischer Terpolymersysteme). Natürlich ist es möglich, einen erfindungsgemäß hergestellten optional hydrierten Nitrilkautschuk aufgrund der Tatsache, dass er in der Polymerhauptkette und/oder den Endgruppen Fragmente des oder der eingesetzten Regler aufweist, als Makro-Regler einzusetzen und durch Umsatz mit geeigneten Monomere in beliebiger Menge z.B. zur Generierung von Block-Systemen einzusetzen.

Die **Glastemperaturen** der erfindungsgemäßen optional hydrierten Nitrilkautschuke liegen im Bereich von -70°C bis +20°C, vorzugsweise im Bereich -60°C bis 10°.

Aufgrund des lebenden Charakters der Polymerisation über das erfindungsgemäße Verfahren ist es möglich, Nitrilkautschuke mit einer extrem engen Molekulargewichtsverteilung zu erhalten. Hergestellt werden können Nitrilkautschuke mit einem Polydispersitätsindex im Bereich von 1,1 bis 2,5, bevorzugt in einem Bereich von 1,3 bis 2,4, besonders bevorzugt in einem Bereich von 1,4 bis 2,2, insbesondere in einem Bereich von 1,5 bis 2,0, ganz besonders bevorzugt in einem Bereich von 1,5 bis kleiner 2. Das erfindungsgemäße Verfahren erlaubt durch Steuerung der Reglerkonzentration eine sehr genaue Einstellung des gewünschten Molekulargewichts und darüber hinaus durch Einsatz der Regler auch den Aufbau gezielter Polymer-Architekturen (z.B. Herstellung von Blöcken Graften auf Polymerbackbones, Oberflächenanbindung sowie weitere dem Fachmann bekannten Polymermodifikationen) sowie gezielter Molekulargewichtsverteilungen von extrem engen bis hin zu breiten Verteilungen, von mono- über bi- bis hin zu multi-modalen Verteilungen.

### Hydrierung:

Ein weiterer Gegenstand der vorliegenden Erfindung besteht in der Bereitstellung von hydrierten Nitrilkautschuken, indem sich an den ersten Polymerisationsschritt a) unmittelbar die Hydrierung b) anschließt, wobei keine vorhergehende Isolierung des Nitrilkautschuks nötig ist wie bei der bisher im Stand der Technik eingesetzen NBR Emulsionspolymerisation. Die Hydrierung kann unmittelbar im Anschluss an die Polymerisation, sofern gewünscht sogar im gleichen Reaktor durchgeführt werden. Dies führt zu einer substantiellen Vereinfachung und damit zu wirtschaftlichen Vorteilen bei der Herstellung des HNBR.

Die Hydrierung kann unter Einsatz homogener oder heterogener Hydrierkatalysatoren durchgeführt werden.

Die eingesetzten Katalysatoren basieren üblicherweise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden (siehe **z.B.**US-A-3,700,637**,** DE-A-25 39 132**,** EP-A- 0 134 023**,** DE-OS- 35 41 689**,** DE-OS- 35 40 918**,** EP-A-0 298 386**,** DE-OS- 35 29 252**,** DE-OS- 34 33 392**,** US-A-4,464,515 **und** US-A-4,503,196**).**

Geeignete Katalysatoren und Lösungsmittel für eine Hydrierung in homogener Phase werden im Folgenden beschrieben und sind auch aus DE-A-25 39 132 und der EP-A-0 471 250 bekannt

Die selektive Hydrierung kann beispielsweise in Gegenwart eines Rhodium- oder Ruthenium-haltigen Katalysators erreicht werden. Einsetzbar ist beispielsweise ein Katalysator der allgemeinen Formel

(R¹ₘB)ₗ M Xₙ,

worin M Ruthenium oder Rhodium ist, R¹ gleich oder verschieden sind und eine C₁-C₈ Alkylgruppe, eine C₄-C₈ Cycloalkylgruppe, eine C₆-C₁₅ Aryl-Gruppe oder eine C₇-C₁₅ Aralkylgruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis(triphenylphosphin)-rhodium-hydrid der Formel (C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers sind geeignet.

Üblicherweise ist es sinnvoll, den Katalysator zusammen mit einem Co-Katalysator zu verwenden, der ein Ligand der Formel R¹ₘB ist, wobei R¹, m und B die zuvor für den Katalysator genannten Bedeutungen besitzen. Bevorzugt ist m gleich 3, B gleich Phosphor und die Reste R¹ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkylmonocycloalkyl, Dicycloalkyl-monoaryl oder Dicyclalkyl-monoaryl-Resten.

Beispiele von Co-Katalysatoren finden sich beispielsweise in US-A-4,631,315. Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.% eingesetzt, bezogen auf das Gewicht des zu hydrierenden Nitrilkautschuks. Bevorzugt liegt ferner das Gewichtsverhältnis des Rhodiumhaltigen Katalysators zum Co-Katalysator im Bereich von 1:3 bis 1:55, besonders bevorzugt im Bereich von 1:5 bis 1:45, bezogen auf 100 Gewichtsteile des zu hydrierenden Nitrilkautschuks werden geeigneterweise 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung dieser Hydrierung ist dem Fachmann aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 bis 150 °C und einem Druck im Bereich von 50 bis 150 bar für 2 bis 10h mit Wasserstoff beaufschlagt.

Unter Hydrierung wird im Rahmen dieser Erfindung eine Umsetzung der im Ausgangs-Nitrilkautschuk vorhandenen Doppelbindungen zu mindestens 50 %, bevorzugt 70-100%, besonders bevorzugt 80-100%, verstanden.

Bei Einsatz heterogener Katalysatoren handelt es sich üblicherweise um geträgerte Katalysatoren auf der Basis von Palladium, die z. B. auf Kohle, Kieselsäure, Calciumcarbonat oder Bariumsulfat geträgert sind.

Aufgrund der guten Möglichkeit, durch den RAFT Regler das Molekulargewicht des entstehenden Polymers zu steuern, ist es insbesondere möglich, NBR-Typen (und entsprechend bei nachgelagerter zusätzlicher Hydrierung auch HNBR-Typen) mit niedrigem Molekulargewicht und niedriger Mooney Viskosität herzustellen, ohne dass es im Fall des HNBR vor der Hydrierung zwingend einem gezielten Abbau des Molekulargewichts (z.B. durch Mastikation, chemischen Abbau oder Metathese) in einem weiteren Verfahrensschritt bedarf. Sofern gewünscht, kann natürlich ein solcher zusätzlicher Molekulargewichtsabbau erfolgen, insbesondere durch die dem Fachmann beispielsweise aus der WO-A-02/100941 sowie der WO-A-02/100905 bekannte Metathese.

Sowohl die erfindungsgemäßen Nitrilkautschuke als auch die hydrierten Nitrilkautschuke zeichnen sich gegenüber den optional hydrierten Nitrilkautschuken, bei denen der Nitrilkautschuk durch Emulsionspolymerisation erhalten wird, dadurch aus, dass sie vollständig Emulgator-frei und auch keine Salze enthalten, wie sie üblicherweise zur Koagulation der Latices nach der Emulsionspolymerisation zwecks Ausfällung des Nitrilkautschukes eingesetzt werden.

**Gegenstand der vorliegenden Erfindung** sind ferner **vulkanisierbare Mischungen** enthaltend den optional hydrierten Nitrilkautschuk und mindestens einen Vernetzer. In einer bevorzugten Ausführungsform handelt es sich um vulkanisierbare Mischungen, die zusätzlich mindestens einen Füllstoff enthalten.

Optional können derartige vulkanisierbare Mischungen auch noch ein oder mehrere dem Fachmann für Kautschuke geläufige Additive enthalten. Diese umfassen Alterungsschutzmittel, Reversionsschutzmittel, Lichtschutzmittel, Ozonschutzmittel, Verarbeitungshilfsmittel, Weichmacher, Mineralöle, Tackifier, Treibmittel, Farbstoffe, Pigmente, Wachse, Harze, Streckmittel, organische Säuren, Vulkanisationsverzögerer, Metalloxide, sowie weitere Füllstoffaktivatoren, wie beispielsweise Triethanolamin, Trimethylolpropan, Polyethylenglykol, Hexantriol, aliphatische Trialkoxysilane oder anderen Additive, die in der Gummiindustrie bekannt sind (Ullmann's Encyclopedia of Industrial Chemistry, VCH Verlagsgesellschaft mbH, D-69451 Weinheim, 1993, vol A 23 "Chemicals and Additives", S. 366-417).

Als **Vernetzer** kommen beispielsweise peroxidische Vernetzer in Frage wie Bis(2,4-dichlorbenzyl)peroxid, Dibenzoylperoxid, Bis(4-chlorbenzoyl)peroxid, 1,1-Bis-(t-butylperoxy)-3,3,5-trimethylcyclohexan, tert-Butylperbenzoat, 2,2 Bis(t-butylperoxy) buten, 4,4-di-tert.Butyl peroxynonylvalerat, Dicumylperoxid, 2,5-Dimethyl-2,5-di(t-butylperoxy)-hexan, tert-Butylcumylperoxid, 1,3-Bis(t-butylperoxy isopropyl)-benzol, Di-t-butylperoxid und 2,5-Dimethyl-2,5-di(t-butylperoxy)-hexyn-3.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropan-tri(meth)acrylat, Triallyltrimellithat, Ethylenglycoldimethacrylat, Butandioldimethacrylat, Trimethylolpropan-trimethacrylat, Zinkacrylat, Zinkdiacrylat, Zinkmethacrylat, Zinkdimethacrylat, 1,2-Polybutadien oder N,N'-m-phenylen-dimaleinimid geeignet.

Die Gesamtmenge des oder der Vernetzer liegt üblicherweise im Bereich von 1 bis 20 phr, bevorzugt im Bereich von 1,5 bis 15 phr und besonders bevorzugt im Bereich von 2 bis 10 phr, bezogen auf den optional hydrierten Nitrilkautschuk.

Als Vernetzer können auch Schwefel in elementarer löslicher oder unlöslicher Form oder Schwefelspender eingesetzt werden.

Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT), und Tetramethylthiuramdisulfid (TMTD) in Frage.

Auch bei der Schwefelvulkanisation der erfindungsgemäßen Nitrilkautschuke ist es möglich, noch weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Umgekehrt kann die Vernetzung der erfindungsgemäßen optional hydrierten Nitrilkautschuk aber auch nur in Gegenwart der oben genannten Zusätze erfolgen, d.h. ohne Zusatz von elementarem Schwefel oder Schwefelspendern.

Als Zusätze, mit deren Hilfe die Vernetzungsausbeute erhöht werden kann, eignen sich z.B. Dithiocarbamate, Thiurame, Thiazole, Sulfenamide, Xanthogenate, Guanidinderivate, Caprolactame und Thioharnstoffderivate.

Als Dithiocarbamate können beispielsweise eingesetzt werden: Ammoniumdimethyl-dithiocarbamat, Natriumdiethyldithiocarbamat (SDEC), Natriumdibutyl-dithiocarbamat (SDBC), Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkdibenzyldithiocarbamat (ZBEC), Zinkpentamethylendithiocarbamat (Z5MC), Tellurdiethyldithio-carbamat, Nickeldibutyldithiocarbamat, Nickeldimethyldithiocarbamat und Zinkdiisononyldithio-carbamat.

Als Thiurame können zum Beispiel eingesetzt werden: Tetramethylthiuramdisulfid (TMTD), Tetramethylthiurammonosulfid (TMTM), Dimethyldiphenylthiuramdisulfid, Tetrabenzylthiuramdisulfid, Dipentamethylenthiuramtetrasulfid und Tetraethylthiuramdisulfid (TETD),

Als Thiazole können zum Beispiel eingesetzt werden: 2-Mercaptobenzothiazol (MBT), Dibenzthiazyldisulfid (MBTS), Zinkmercaptobenzothiazol (ZMBT) und Kupfer-2-mercaptobenzothiazol.

Als Sulfenamidderivate können zum Beispiel eingesetzt werden: N-Cyclohexyl-2-benzothiazylsulfenamid (CBS), N-tert.-Butyl-2-benzthiazylsulfenamid (TBBS), N,N'-Dicyclo-hexyl-2-benzthiazylsulfenamid (DCBS), 2-Morpholinothiobenzthiazol (MBS), N-Oxydiethylenthiocarbamyl-N-tert.butylsulfenamid und Oxydiethylenthiocarbamyl-N-oxyethylensulfenamid.

Als Xanthogenate können zum Beispiel eingesetzt werden: Natriumdibutylxanthogenat, Zinkisopropyldibutylxanthogenat und Zinkdibutylxanthogenat.

Als Guanidinderivate können zum Beispiel eingesetzt werden: Diphenylguanidin (DPG), Di-o-tolylguanidin (DOTG) und o-Tolylbiguanid (OTBG).

Als Dithiophosphate können beispielsweise eingesetzt werden: Zinkdialkydithiophosphate (Kettenlänge der Alkylreste C2 bis C16), Kupferdialkyldithiophosphate (Kettenlänge der Alkylreste C₂ bis C₁₆) und Dithiophoshorylpolysulfid.

Als Caprolactam kann beispielsweise Dithio-bis-caprolactam eingesetzt werden.

Als Thioharnstoffderivate können beispielsweise N,N'-Diphenylthioharnstoff (DPTU), Diethylthioharnstoff (DETU) und Ethylenthioharnstoff (ETU) eingesetzt werden.

Ebenso als Zusätze geeignet sind beispielsweise: Zinkdiamindiisocyanat, Hexamethylentetramin, 1,3-Bis(citraconimidomethyl)benzol sowie zyklische Disulfane.

Die genannten Zusätze als auch die Vernetzungsmittel können sowohl einzeln als auch in Mischungen eingesetzt werden. Bevorzugt werden folgende Substanzen für die Vernetzung der Nitrilkautschuke eingesetzt: Schwefel, 2-Mercaptobenzthiazol, Tetramethylthiuramdisulfid, Tetramethylthiurammonosulfid, Zinkdibenzyldithiocarbamat, Dipentamethylenthiuramtetrasulfid, Zinkdialkydithiophosphat, Dimorpholyldisulfid, Tellurdiethyldithiocarbamat, Nickeldibutyldithiocarbamat, Zinkdibutyldithiocarbamat, Zinkdimethyldithiocarbamat und Dithiobis-caprolactam.

Die Vernetzungsmittel und zuvor genannten Zusätze können jeweils in Mengen von ca. 0,05 bis 10 phr, vorzugsweise 0,1 bis 8 phr, insbesondere 0,5 bis 5 phr (Einzeldosierung, jeweils bezogen auf die Wirksubstanz) bezogen auf den optional hydrierten Nitrilkautschuk eingesetzt werden.

Bei der erfindungsgemäßen Schwefelvernetzung ist es gegebenenfalls auch sinnvoll, zusätzlich zu den Vernetzungsmitteln und oben genannten Zusätzen auch weitere anorganische bzw. organische Substanzen mit zu verwenden, beispielsweise: Zinkoxid, Zinkcarbonat, Bleioxid, Magnesiumoxid, Calciumoxid, gesättigte oder ungesättigte organische Fettsäuren und deren Zinksalze, Polyalkohole, Aminoalkohole, wie zum Beispiel Triethanolamin sowie Amine wie zum Beispiel Dibutylamin, Dicyclohexylamin, Cyclohexylethylamin und Polyetheramine.

Sofern es sich bei den erfindungsgemäßen optional hydrierten Nitrilkautschuken um solche handeln, die Wiederholungseinheiten eines oder mehrerer carboxygruppenhaltiger Termonomere beinhalten, so kann ein Vernetzung auch über den Einsatz eines Polyamin-Vernetzers erfolgen, bevorzugt in Gegenwart eines Vernetzungsbeschleunigers. Der Polyamin-Vernetzer ist nicht eingeschränkt, solange es sich (1) um eine Verbindung handelt, die entweder zwei oder mehr Amino-Gruppen enthält (ggf. auch in Salz-Form) oder (2) um eine Spezies, die während der Vernetzungsreaktion in-situ eine Verbindung ausbildet, die zwei oder mehr Amino-Gruppen ausbildet. Bevorzugt wird eine aliphatische oder aromatische Kohlenwasserstoffverbindung eingesetzt bei der mindestens zwei Wasserstoffatome entweder durch Aminogruppen ersetzt sind oder aber durch Hydrazid-Strukturen (letzteres eine Struktur "-C(=O)NHNH₂")

Beispiele für derartige Polyamin-Vernetzer (ii) sind:
- Aliphatische Polyamine, bevorzugt Hexamethylendiamin, Hexamethylendiamin carbamat, Tetramethylenpentamin, Hexamethylendiaminzimtaldehyd-Addukt oder Hexamethylendiamindibenzoat;
- Aromatische Polyamine, bevorzugt 2,2-Bis(4-(4-aminophenoxy)phenyl) propan, 4,4'-Methylendian i l in, m-Phenylendiamin, p-Phenylendiamin oder 4,4'-Methylen-bis(o-chloroanilin;
- Verbindungen mit mindestens zwei Hydrazid-Strukturen, bevorzugt Isophthalsäure dihydrazid, Adipinsäuredihydrazid oder Sebacinsäuredihydrazid.

Besonders bevorzugt sind Hexamethylendiamin und Hexamethylendiamincarbamat.

Die Menge des Polyamin-Vernetzeres in der vulkanisierbaren Mischung liegt üblicher Weise im Bereich von 0,2 bis 20 Gew.-Teile, bevorzugt im Bereich von 1 bis 15 Gew.-Teile und besonders bevorzugt im Bereich von 1,5 bis 10 Gew.-Teile bezogen auf 100 Gew.Teile des optional hydrierten Nitrilkautschuks.

Als Vernetzungsbeschleuniger kann in Kombination mit dem Polyamin-Vernetzer jeder dem Fachmann bekannte eingesetzt werden, bevorzugt ein basischer Vernetzungsbeschleuniger. Einsetzbar sind z.B. Tetramethylguanidin, Tetraethylguanidin, Diphenylguanidin, Di-o-tolylguanidin (DOTG), o-Tolylbiguanidin und Di-o-tolylguanidin-Salz der Dicathecolborsäure. Einsetzbar sind ferner Aldehydeamin-Vernetzungsbeschleuniger wie z.B. n-Butylaldehydanilin. Besonders bevorzugt wir als Vernetzungsbeschleuniger mindestens eine bi- oder polycyclische aminische Base. Diese sind dem Fachmann bekannt. Insbesondere geeignet sind 1,8-diazabicyclo[5.4.0]undec-7-en (DBU), 1,5-diazabicyclo[4.3.0]-5-nonen ( D B N ), 1,4-diazabicyclo[2.2.2]octan (DABCO), 1,5,7-triazabicyclo[4.4.0]dec-5-en (TBD), 7-methyl-1,5,7-triazabicyclo[4.4.0]dec-5-en (MTBD).

Die Menge des Vernetzungsbeschleunigers liegt in diesem Fall üblicher Weise in einem Bereich von 0,5 bis 10 Gew.-Teile, bevorzugt 1 bis 7,5 Gew.-Teile, insbesondere 2 bis 5 Gew.-Teile, bezogen auf 100 Gew.-Teile des optional hydrierten Nitrilkautschuks.

Die vulkanisierbare Mischung basierend auf dem erfindungsgemäßen optional hydrierten Nitrilkautschuk kann prinzipiell auch Anvulkanisationsverzögerer enthalten. Hierzu gehören Cyclohexylthiophthalimid (CTP), N,N' Dinitrosopentamethlyentetramin (DNPT), Phthalsäureanhydrid (PTA) und Diphenylnitrosamin. Bevorzugt ist Cyclohexylthiophthalimid (CTP).

Neben der Zugabe des oder der Vernetzer kann der erfindungsgemäße optional hydrierten Nitrilkautschuk auch mit weiteren üblichen Kautschukadditiven gemischt werden.

Als Füllstoffe können beispielsweise Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanotubes, Teflon (letzteres bevorzugt in Pulverform), oder Silikate eingesetzt werden.

Als **Füllstoffaktivatoren** kommen insbesondere organische Silane, wie beispielsweise Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyl-trimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglycole mit Molekulargewichten von 74 bis 10 000 g/mol dar. Die Menge an Füllstoffaktivatoren beträgt üblicherweise 0 bis 10 phr, bezogen auf 100 phr des optional hydrierten Nitrilkautschuks.

Als **Alterungsschutzmittel** können den vulkanisierbaren Mischungen diejenigen zugesetzt werden, die bereits im Zusammenhang mit der Latexkoagulation in dieser Anmeldung beschrieben werden. Sie werden üblicherweise in Mengen von ca. 0 bis 5 phr, bevorzugt 0,5 bis 3 phr, bezogen auf 100 phr des optional hydrierten Nitrilkautschuks eingesetzt.

Als **Formtrennmittel** kommen beispielsweise in Betracht: Gesättigte und teilweise ungesättigte Fett-und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die Formtrennmittel werden als Mischungsbestandteil in Mengen von ca. 0 bis 10 phr, bevorzugt 0,5 bis 5 phr, bezogen auf 100 phr des optional hydrierten Nitrilkautschuks eingesetzt.

Auch die Verstärkung mit Festigkeitsträgern (Fasern) aus Glas, nach der Lehre von US-A-4,826,721 ist möglich sowie die Verstärkung durch Corde, Gewebe, Fasern aus aliphatischen und aromatischen Polyamiden (Nylon®, Aramid®), Polyestern und Naturfaserprodukten.

**Gegenstand der vorliegenden Erfindung** ist ferner ein **Verfahren zur Herstellung von Vulkanisaten,** dadurch gekennzeichnet, dass die zuvor genannte vulkanisierbare Mischung einer Vernetzung unterzogen wird. Die Vernetzung wird typischerweise entweder durch mindestens einen Vernetzer oder aber durch photochemische Aktivierung herbeigeführt.

Im Fall der **photochemisch aktivierten Vulkanisation** können als UV-Aktivatoren die dem Fachmann üblicherweise bekannten eingesetzt werden, beispielsweise Benzophenon, 2-Methylbenzophenon, 3,4-Dimethylbenzophenon, 3-Methylbenzophenon, 4,4'-Bis(diethylamino)benzophenon, 4,4'-Di-hydroxybenzophenon, 4,4'-Bis[2-(1-propenyl)phenoxy]benzophenon, 4-(Diethylamino)benzophenon, 4-(Dimethylamino)benzophenon, 4-Benzoylbiphenyl, 4-Hydroxybenzophenon, 4-Methylbenzophenon, Benzophenon-3,3',4,4'-tetracarboxyldianhydrid, 4,4'-Bis(dimethylamino)benzophenon, Acetophenon, 1-Hydroxycyclohexylphenylketon, 2,2-Diethoxyacetophenon, 2,2-Dimethoxy-2-phenylacetophenon, 2-Benzyl-2-(dimethylamino)-4'-morpholino-butyrophenon, 2-Hydroxy-2-methylpropiophenon, 2-Hydroxy-4'-(2-hydroxyethoxy)-2-methytpropiophenon, 3 '-H ydroxyacetophenon, 4'-Ethoxyacetophenon, 4'-Hydroxyacetophenon, 4'-Phenoxyacetophenon, 4'-tert-Butyl-2',6'-dimethylacetophenon, 2-Methyl-4'-(methylthio)-2-morpholinopropiophenon, Diphenyl-(2,4,6-trimethylbenzoyl)-phosphinoxid, Phenylbis(2,4, 6-trimethylbenzoyl)phosphinoxid, Methylbenzoylformat, Benzoin, 4,4'-Dimethoxybenzoin, Benzoinmethylether, Benzoinethylether, Benzoinisopropylether, Benzoinisobutylether, 4,4'-Dimethylbenzil, Hexa-chlorocyclopentadiene oder Kombinationen daraus.

**Üblicherweise erfolgt die Vulkanisation im Rahmen eines formgebenden-Verfahrens**, bevorzugt unter Anwendung eines Spritzgussverfahrens.

**Gegenstand der Erfindung** ist somit ebenso das spezielle Formteil, welches erhältlich ist durch das vorgenannte Vulkanisationsverfahren. Es ist möglich, eine Vielzahl von Formteilen herzustellen, wie z.B. Dichtungen, Kappen, Schläuche oder Membranen. Herstellbar sind z.B. O-Ringdichtungen, Flachdichtungen, Wellendichtringe, Dichtmanschetten, Dichtkappen, Staubschutzkappen, Steckerdichtungen, Thermoisolierschläuche (mit und ohne PVC-Zusatz), Ölkühlerschläuche, Luftansaugschläuche, Servolenkschläuche oder Pumpenmembranen.

### BEISPIELE

Im Rahmen der folgenden Beispiele konnte mittels Massenspektrometrie (MS) eindeutig festgestellt werden, dass der erfindungsgemäße Nitrilkautschuk als Endgruppe der Polymerketten ein Regler Fragment enthält, welches auf dem eingesetzten Regler basiert. Darüber hinaus konnte die Wirksamkeit der auf diese Weise hergestellten, das Regler-Fragment enthaltenden Polymere als weiter zu verwendende Makroregler durch die Herstellung eines NBR-block Polystyrol-Systems eindeutig nachgewiesen werden.

### Acrylnitrilgehalt:

Der Stickstoffgehalt zur Bestimmung des Acrylnitrilgehalts wurde in den erfindungsgemäßen Nitrilkautschuken gemäß DIN 53 625 nach Kjeldahl bestimmt.

### Glasüberlzangstemperatur:

Die Bestimmung der Glasübergangstemperatur, sowie deren sogenannte Onset- und Offsetpunkte erfolgt mittels dynamischer Differenzkalorimetrie (engl.: *Differential Scanning Calorimetry -* DSC) nach ASTM E 1356-03 bzw. nach DIN 11357-2.

### Molekulargewichte sowie Polydispersitätsindex:

Die Bestimmung der Molekulargewichte in Form des Zahlenmittels des Molekulargewichts (Mₙ) und des Gewichtsmittels des Molekulargewichts (M_{w}) sowie des Polydispersitätsindex erfolgte mittels Gelpermeations-Chromatographie (GPC) nach DIN 55672-1 (Teil 1: Tetrahydrofuran THF als Lösungsmittel).

### Gelgehalt:

Die Bestimmung der unlöslichen Anteile (der sogenannten "Gelgehalte") erfolgte nach 22 stündigem Lösen einer Probe bei Raumtemperatur in Methylethylketon (MEK) als Lösungsmittel und einer Konzentration des Polymers von 10g/L and anschließender einstündiger Ultrazentrifugation mit 20.000 UpM bei 25 °C.

### Mikrostruktur:

Die Bestimmung der **Mikrostruktur** der einzelnen Polymere erfolgte mittels 1H NMR (Gerät: Bruker DPX400 mit Software XWIN-NMR 3.1, Messfrequenz 400 MHz, Lösemittel CDCl₃).

Die in Tabelle 1 und 2 aufgeführten Chemikalien wurden über den Chemikalienhandel bzw. aus den Produktionsanlagen der Anmelderin bezogen.

Der eingesetzter Regler "DoPAT" (Dodecylpropansaeure-trithiocarbonat wie in der nachfolgenden Formel dargestellt) wurde im Labor nach dem in Macromolecules (2005), 38 (6), 2191-2204 beschriebenen Herstellungsverfahren synthetisiert.

### Beispiel 1-5 (erfindungsgemäß):

### Herstellung von Nitrilkautschuken ("NBR") in verschiedenen organischen Lösungsmitteln bei unterschiedlichen Konzentrationen des Reglers

Die Herstellung der in den folgenden Beispielserien eingesetzten Nitrilkautschuke NBR #1 bis #5 erfolgte nach der in Tabelle 1 angegebenen Basisrezeptur, wobei sämtliche Einsatzstoffe in Gew.-Teilen bezogen auf 100 Gew.-Teile der Monomermischung angegeben sind. Tabelle 1 nennt auch die jeweiligen Polymerisationsbedingungen.

Sämtliche Apparaturen werden vor dem Kontakt mit 1,3-Butadien durch dreimaliges Evakuieren und Spülen mit Argon sauerstofffrei gemacht.

### In Beispiel 1 wurde wie Folgt polymerisiert:

284,9 mg Vazo® 88 (1,17 mmol entsprechend 0.31 phm) und 204 mg DoPAT (0,583 mmol entsprechend 0.22 phm) wurden in 50 ml (51 phm) Dimethylacetamid gelöst, 43 ml Acrylnitril (653,3 mmol entsprechend 37 phm) zugesetzt und für 10 Minuten mit Argon entgast. Die Monomer-/ Initiatorlösung wurde in den Reaktor überführt, dieser verschlossen und durch dreimaliges Evakuieren / Spülen mit Argon sauerstofffrei gemacht. 90 ml 1,3-Butadien (1077 mmol entsprechend 63 phm) wurden über eine Druckbürette unter einem Druck von 3 bar zudosiert und die Reaktion durch Erhitzen auf 100°C gestartet. Das Erreichen dieser Temperatur stellt den Polymerisationsbeginn dar. Der Polymerisationsverlauf wurde durch gravimetrische Umsatzbestimmungen mittels zwischenzeitlicher Probenentnahme verfolgt. Nach einer Polymerisationszeit von 9 Stunden wurde die Heizquelle entfernt, überschüssiges 1,3-Butadien nach Abkühlen des Reaktors durch Belüften entfernt und das Polymer durch Fällung in Ethanol, welches die in Tabelle 1 angegebenen Menge an Brenzkatechin/Hydrochinon als Stabilisator enthielt. Das Polymer wurde anschließend im Hochvakuum getrocknet.

Die Polymerisationen der Beispiele 2 bis 5 wurden analog durchgeführt unter Variation der Menge des Reglers und des Initiators sowie der Art des Lösungsmittels (siehe Tabelle 1). Soweit die Polymerisationsbedingungen von denen in Beispiel 1 abwichen, ist dies ebenfalls in Tabelle 1 aufgeführt.

### Beispiel 6 (erfindunsgemäß):

### Herstellung eines NBR-Terpolymers mit Hydroxyethylacrylat (HEA) als Termonomer in organischem Lösungsmittel

Die Synthese des Terpolymers NBR #6 erfolgte gemäß der oben für Beispiel 1 aufgeführten allgemeinen Synthesevorschrift. Lediglich die eingesetzten Monomermengen wurden angepasst, die Einzelmengen der Einsatzstoffe sind Tabelle 1 zu entnehmen. Hydroxyethylacrylat (HEA) und Acrylnitril (ACN) wurden dem Lösungsmittel vor dem Entgasen mit Argon zugesetzt. Die Reaktion wurde nach 6 Stunden (Endumsatz 39%) abgebrochen.

### Beispiele 7 und 8 (erfindungsgemäß):

### Herstellung eines NBR-block-Styrol Terpolymers in organischem Lösungsmittel

In Beispiel 7 wurde bewusst ein niedermolekulares NBR (NBR #7) hergestellt, welches in der Folge in Beispiel 8 als RAFT Makromer eingesetzt wurde. Diese Polymerisation zu NBR #7 erfolgte gemäß der oben für Beispiel 1 aufgeführten allgemeinen Synthesevorschrift unter Anpassung der Reglermenge (Erhöhung auf 2,22 phm zur Erzielung eines niedrigen Molekulargewichts). Die Einzelmengen der Einsatzstoffe sind Tabelle 1 zu entnehmen. Die Reaktion wurde nach 9 h bei einem Endumsatz von 48% abgebrochen und das Polymer wie oben beschrieben (Beispiele 1 bis 5) isoliert.

Anschließend wurden in Beispiel 8 2,74 g des in Beispiel 7 erhaltenenen RAFT-Makromer NBRs #7 (Mn = 12.000 g/mol) in 2g DMAc gelöst und mit 2,79 g (26.8 mmol entsprechend 50 phm) Styrol versetzt. Das Reaktionsgefäß wurde mit einem Septum verschlossen und die Reaktionslösung 10 min mittels einer Kanüle mit Argon entgast. Die Reaktion wurde durch Eintauchen in ein temperiertes Ölbad (T = 100 °C) gestartet und nach 13 Stunden bei einem Endumsatz von 9.2 % durch Belüften und Fällung in MeOH abgebrochen. Der Überstand wurde abdekantiert und die Polymerprobe NBR #8 im Hochvakuum getrocknet.

**Tabelle 1: Beispiele 1-8 (erfindungsgemäß) Rezepturen und Polymerisationsbedingungen**

| **Bezeichnung:** | | **NBR 1** | **NBR 2** | **NBR 3** | **NBR 4** | **NBR 5** | **NBR 6** | **NBR 7** | **NBR 8** |
|---|---|---|---|---|---|---|---|---|---|
| **Rezeptur:** | | | | | | | | | |
| **Acrylnitril** | phm | 37 | 37 | 37 | 37 | 37 | 30 | 37 | --- |
| **Butadien** | phm | 63 | 63 | 63 | 63 | 63 | 50 | 63 | --- |
| **Hydroxyethylacrylat** | phm | --- | --- | --- | --- | --- | 20 | --- | --- |
| **Styrol** | phm | --- | --- | --- | --- | --- | --- | --- | 50 |
| **DoPAT-NBR#7** | phm | --- | --- | --- | --- | --- | --- | --- | 50 |
| **DoPAT** | phm | 0,222 | 0,666 | 0,222 | 0,666 | 3,31 | 0,197 | 2,22 | --- |
| **DMAc** | phm | 51 | 51 | --- | --- | 202 | 45 | 51 | 63 |
| **MCB** | phm | --- | --- | 56 | 56 | --- | --- | --- | --- |
| **Vazo^{®} 88** | phm | 0,310 | 0,310 | 0,310 | 0,310 | 0,23 | 0,275 | 0,310 | 0,056 |
| **Brenzkatechin/ Hydrochinon** | phm | 5,7 | 5,7 | 5,7 | 5,7 | 5,7 | 5,7 | 5,7 | 5,7 |
| **Reaktionsbedingungen:** | | | | | | | | | |
| **Polymerisations-temperatur** | °C | 100 | 100 | 100 | 100 | 100 | 100 | 100 | 100 |
| **Polymerisationszeit** | h | 9 | 9 | 9 | 9 | 5 | 6 | 9 | 13 |
| **Endumsatz** | % | 50 | 49 | 51 | 53 | 28 | 39 | 48 | 9,2 |

| | | | | | | | | | |
|---|---|---|---|---|---|---|---|---|---|
| wobei: DMAc: Dimethylacetamid MCB: Monochlorbenzol DoPAT: Dodecylpropansäuretrithiocarbonat Vazo^{®} 88: 1,1'-Azobis(cyclohexancarbonitril) (DuPont) | | | | | | | | | |

### Vergleichsbeispiele A und B:

### NBR-Herstellung in Emulsion unter Einsatz von TDM

Die Herstellung der in den folgenden Beispielserien eingesetzten Nitrilkautschuke NBR #A und #B erfolgte nach der in Tabelle 2 angegebenen Basisrezeptur, wobei sämtliche Einsatzstoffe in Gew.-Teilen bezogen auf 100 Gew.-Teile der Monomermischung angegeben sind. Tabelle 2 nennt auch die jeweiligen Polymerisationsbedingungen.

Die Herstellung der Nitrilkautschuke erfolgte diskontinuierlich in einem 5L-Autoklaven mit Rührwerk. Bei den Autoklavenansätzen wurden jeweils 1,25 kg der Monomermischung und eine Gesamtwassermenge von 2,1 kg verwendet. Von dieser Wassermenge wurden 1,9 kg mit dem Emulgator Edenor^{®}HtiCT und Natriumhydroxid im Autoklaven vorgelegt (pH-Wert der Seifenloesung: 11.0 +/- 1.0) und mit einem Stickstoffstrom gespült. Danach wurden die entstabilisierten Monomeren und die in Tabelle 2 angegebene Menge des Molekulargewichtsreglers TDM zugegeben und der Reaktor verschlossen. Nach der Thermostatisierung des Reaktorinhalts wurden die Polymerisationen durch die Zugabe wässriger Lösungen in Form der Aktivator-Lösung sowie von para-Menthanhydroperoxid (Trigonox NT50) gestartet.

Der Polymerisationsverlauf wurde durch gravimetrische Umsatzbestimmungen verfolgt. Bei Erreichen der in Tabelle 2 angegebenen Umsätze wurde die Polymerisation durch Zugabe einer wässrigen Lösung von Diethylhydroxylamin abgestoppt. Nicht umgesetzte Monomere und sonstige flüchtige Bestandteile wurden mittels Wasserdampfdestillation entfernt.

Vor der Koagulation des jeweiligen NBR-Latex wurde dieser jeweils mit einer 50%igen Dispersion von Vulkanox^{®} BKF (0,3 Gew. % Vulkanox^{®} BKF bezogen auf NBR-Feststoff) versetzt. Anschließend wurde koaguliert, gewaschen und die erhaltenen Krümel getrocknet.

**Tabelle 2: Beispiele A und B (Vergleich) Rezepturen und Polymerisationsbedingungen**

| **Bezeichnung:** | | **NBR A** | **NBR B** |
|---|---|---|---|
| **Rezeptur:** | | | |
| **Acrylnitril** | phm | 37 | 37 |
| **Butadien** | phm | 63 | 63 |
| **TDM** | phm | 0,7 | 1,2 |
| **Wasser** | phm | 200 | 200 |
| **Edenor^{®} HTiCT, Na-/K-Salz** | phm | 2,0 | 2,0 |
| **Trigonox^{®} NT50** | phm | 0,020 | 0,020 |
| **Aktivatorlösung** | phm | 0,022 | 0,022 |
| **Diethylhydroxylamin** | phm | 0,4 | 0,4 |
| **Vulkanox BKF** | phr | 0,3 | 0,3 |
| **Reaktionsbedingungen:** | | | |
| **Polymerisationstemperatur** | °C | 13 | 13 |
| **Polymerisationszeit** | h | 8,5 | 9,5 |
| **Endumsatz** | % | 56 | 56 |

| | | | |
|---|---|---|---|
| wobei: TDM tertiäres Dodecylmercaptan (Lanxess Deutschland GmbH; Herstellung auch beschrieben in WO-A-2008/142037) Edenor^{®} HtiCT, Na-/K-Salz selektiv gehärtete Talgfettsäure, mit KOH/NaOH verseift (Cognis GmbH) Trigonox^{®} NT50 para-Menthanhydroperoxid Aktivatorlösung enthaltend 0,986 g Fe(II)SO₄*7 H₂O und 2,0 g Rongalit^{®}C (Natriumformaldehydsulfoxylat Hydrat, ≥98% Reinheit) auf 400 g Wasser Vulkanox BKF 2,2'-Methylen-bis(6-tert.butyl)paracresol (Lanxess Deutschland GmbH) Fälllösung Ethanol enthaltend 5,7 phm Brenzkatechin/Hydrochinon | | | |

**Tabelle 3: Analytische Ergebnisse für die Beispiele 1-8 sowie NBR A und B**

| **Bezeichnung:** | | NBR 1 | NBR 2 | NBR 3 | NBR 4 | NBR 5 | NBR 6 | NBR 7 | NBR 8 | NBR A | NBR B |
|---|---|---|---|---|---|---|---|---|---|---|---|
| **GPC-Ergebnisse:** | | | | | | | | | | | |
| Mn | g/mol | 58.000 | 28.100 | 66.000 | 30.100 | 6.600 | 42.800 | 12.500 | 16.100 | 64.000 | 38.600 |
| Mw | g/mol | 98.000 | 44.600 | 126.000 | 45.700 | 8.700 | 75.300 | 16.000 | 21.100 | 146.100 | 76.100 |
| Poly-dispersitaet | | 1,7 | 1,6 | 1,9 | 1,5 | 1,3 | 1,8 | 1,3 | 1,3 | 2,3 | 2,0 |
| **ACN:** | | | | | | | | | | | |
| gebundenes ACN | % | 37,9 | 37,3 | 36,1 | 34,1 | n.b. | 36,9 | 37,4 | 25,3 | 37,0 | 36,6 |
| **DSC-Werte:** | | | | | | | | | | | |
| Tg | °C | -24,0 | -21,8 | -24,8 | -24,8 | n.b. | -19,6 | -28,5 | -20,3 | -23,2 | -28,5 |
| onset | °C | -28,8 | -26,3 | -29,5 | -29,3 | n.b. | -28,3 | -34,1 | -29,4 | -27,4 | -34,2 |
| offset | °C | -19,0 | -16,6 | -19,6 | -19,9 | n.b. | -10,5 | -22,9 | -12,9 | -18,2 | -22,6 |
| delta Tg | °C | 9,8 | 9,7 | 9,9 | 9,3 | n.b. | 17,9 | 11,2 | 16,6 | 9,2 | 11,5 |
| **Gelmessung:** | | | | | | | | | | | |
| Gelgehalt | % | 0,6 | 5,0 | 0,5 | 0,7 | n.b. | 0,8 | 0,4 | 0,5 | 0,5 | 0,6 |
| **Mikrostruktur (1H NMR):** | | | | | | | | | | | |
| ACN | % | 38,1 | 38,9 | 37,5 | 37,0 | n.b. | 37,4 | n.b. | n.b. | 39,2 | 38,7 |
| 1,4 BD | % | 53,4 | 52,9 | 54,0 | 54,4 | n.b. | 43,8 | n.b. | n.b. | 54,5 | 55,0 |
| 1,2 vinyl BD | % | 8,5 | 8,2 | 8,5 | 8,6 | n.b. | 6,0 | n.b. | n.b. | 6,3 | 6,3 |
| Hydroxyethyl-acrylat | % | n.b. | n.b. | n.b. | n.b. | n.b. | 12,8 | n.b. | n.b. | n.b. | n.b. |

### Massenspektrometrische Untersuchungen an NBR #5 zum Nachweis der Strukturelemente des eingesetzten Reglers im Polymer:

### Gerätesystem:

Die ESI_MS Spektren ("Electroscopy Ionization-Mass Spectra") werden an einem LXQ Massenspektrometer der Firma ThermoFisher Scientific, San Jose, CA, USA, aufgenommen. Das Gerät ist ausgestattet mit einer unter Atmosphärendruck arbeitenden Ionisierungsquelle im Zerstäuber-Elektrospray Modus. Das Gerät ist im Bereich von 195 bis 1822 m/z kalibriert. Als Kalibriermaterial wird ein Gemisch aus Koffein, Met-Arg-Phe-Ala-acetat (MRFA) und eine Mischung fluorierter Phosphazene (Ultramark 1621)(sämtliche Substanzen von Aldrich) verwendet. Als Ionisierungsspannung werden 4,5 kV eingesetzt, wobei Stickstoff mit einem dimensionslosen Fluss von 2 (ungefähr 3 L·min⁻¹) als Spülgas und mit einem Fluss von 12 (ungefähr 1 L·min⁻¹) als Trägergas verwendet wird. Die Spektren werden im Bereich von 150 - 2000 m/z aufgezeichnet mit einer Kapillarspannung von 110 V und einer Kapillartemperatur von 275 °C. Das LXQ-System ist mit einem 1200 HPLC-System (Agilent, Santa Barbara, CA; USA) gekoppelt, das aus folgenden Komponenten aufgebaut ist: einem G1322A Entgaser, einer Zweifachpumpe (G1312A), einem Probensammler (G1367B) und einem thermostatisierten Säulenkammer. Die Auftrennung erfolgt auf zwei SEC-Säulen (Polymer Laboratories, Mesopore 250x4.6mm, Partikeldurchmesser 3 µm und Mesopore 50x4.6mm (Vorsäule)) bei 30 °C. Als Laufmittel wird THF mit einer Flussrate von 0,3 ml·min⁻¹ benutzt. Das Massenspektrometer wird mit der Säule parallel zu einem RI-Detektor geschaltet (G1362A mit SS420x A/D). 0,27 ml·min⁻¹ des Eluenten werden direkt durch den RI-Detektor geleitet und 30 µl·min⁻¹ werden in die Elektronensprühquelle geführt, nachdem eine 100 µM Lösung Natriumiodid in Methanol mit einer Flussrate von 20 µl·min⁻¹ mit einer Micro-flow HPLC Pumpe (Teledyne ISCO, Modell 100DM) hinzugefügt wurden.

### Probenverarbeitung:

Die Proben werden mit einer Polymerkonzentration von 2 mg·ml⁻¹ in THF hergestellt und mittels eines 0.45 µmPTFE-Filters aufgereinigt. Von dieser-Lösung werden 20 µl dem System zugeführt.

### Interpretation der Spektren:

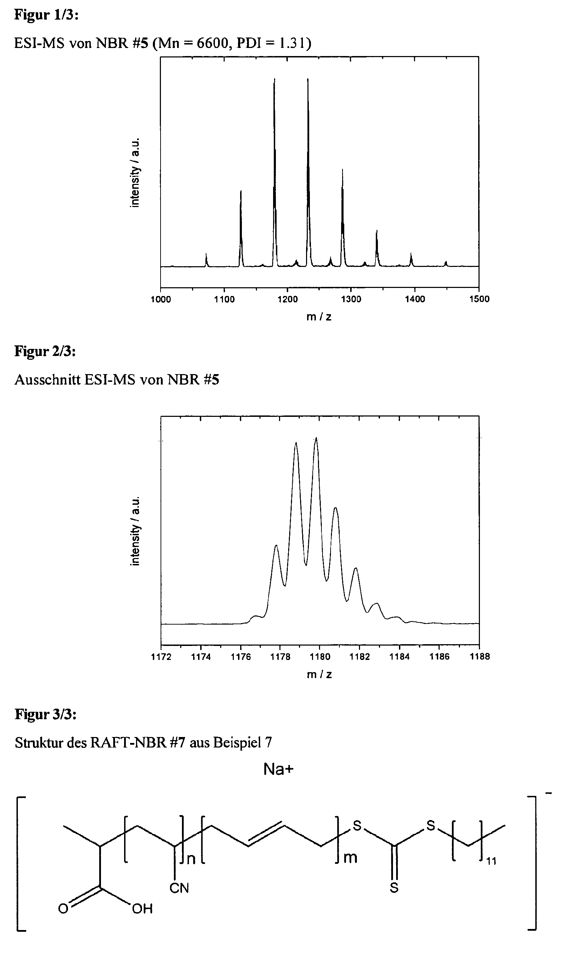

In den Figuren 1/3 und 2/3 sind das Massenspektrum der Probe NBR #5 bzw. ein Ausschnitt des Spektrums gezeigt. Die in Tabelle 5 angegebenen theoretischen m/z-Werte wurden unter Verwendung von absoluten Molmassen und der Annahme, dass an den Enden der Polymerketten die Z- bzw. R-Endgruppen des verwendeten Reglers DoPAT sitzen, berechnet. Ein Vergleich der berechneten mit den tatsächlich gemessenen m/z-Werten zeigt mit Abweichungen unter 0.1 m/z eine für diese Methode sehr gute Übereinstimmung. Die von dem eingesetzten Regler herrührenden Polymerendgruppen sind somit eindeutig nachweisbar.

**Tabelle 5:**

| | | | | |
|---|---|---|---|---|
| **Mögliche Copolymerzusammensetzungen und resultierende m/z-Werte (+Na⁺)** Die Indices n und m beziehen sich auf die Acrylnitril-Wiederholungseinheiten bzw. die Butadien-Wiederholungeinheiten mit erhaltenen Polymer (siehe Figur 3/3). | | | | |

| **n(AN)** | **m(BD)** | **m/z theo** | **m/z exp** | **delta m/z** |
|---|---|---|---|---|
| 6 | 9 | 1177.76 | 1177.83 | 0.07 |
| 5 | 10 | 1178.78 | 1178.83 | 0.05 |
| 4 | 11 | 1179.80 | 1179.83 | 0.03 |
| 3 | 12 | 1180.82 | 1180.83 | 0.01 |
| 2 | 13 | 1181.84 | 1181.75 | 0.09 |

## Patentansprüche

1. Nitrilkautschuk enthaltend
(i) Wiederholungseinheiten abgeleitet von mindestens einem konjugierten Dien, mindestens einem α,β-ungesättigten Nitril und gegebenenfalls einem oder mehreren weiteren copolymerisierbaren Monomeren sowie
(ii) ein oder mehrere Strukturelemente der allgemeinen Formeln (I), (II), (III), (IV) oder (V) 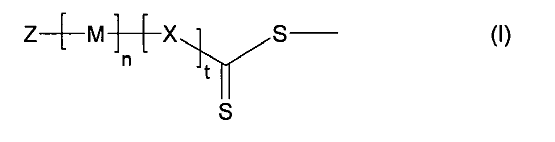 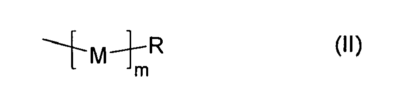 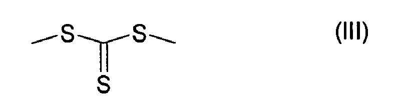 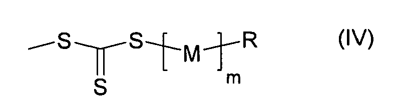 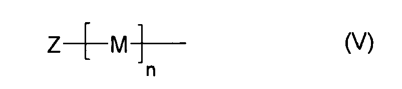 worin
Z für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Hydroxyimino, Carbamoyl, Alkoxycarbonyl, F, Cl, Br, I, Hydroxy, Phosphonato, Phosphinato, Alkylthio, Arylthio, Sulfanyl, Thiocarboxy, Sulfinyl, Sulfono, Sulfino, Sulfeno, Sulfonsäuren, Sulfamoyl, Silyl, Silyloxy, Nitril, Carbonyl, Carboxy, Oxycarbonyl, Oxysulfonyl, Oxo, Thioxo, Borate, Selenate, Epoxy, Cyanate, Thiocyanate, Isocyanate, Thioisocyanate und Isocyanide,
R (a) für den Fall, dass m ≠ 0 ist, die gleichen Bedeutungen besitzt wie der Rest Z und (b) für den Fall, dass m = 0 ist, für H, einen linearen oder verzweigten, gesättigten, ein- oder mehrfach ungesättigten Alkylrest, einen gesättigten, ein- oder mehrfach ungesättigten Carbo-oder Heterocyclylrest, Aryl, Heteroaryl, A rylalkyl, Heteroarylalkyl, Alkoxy, Aryloxy, Heteroaryloxy, Amino, Amido, Carbamoyl, Alkoxy, Aryloxy, Alkylthio, Arylthio, Sulfanyl, Thiocarboxy, Sulfinyl, Sulfono, Sulfino, Sulfeno, Sulfonsäuren, Sulfamoyl, Carbonyl, Carboxy, Oxycarbonyl, Oxysulfonyl, Oxo, Thioxo, Epoxy, Cyanate, Thiocyanate, Isocyanate, Thioisocyanate oder Isocyanide steht,
M für Wiederholungseinheiten eines oder mehrerer, ein- oder mehrfach ungesättigter Monomeren steht, umfassend konjugierte oder nicht-konjugierte Diene, Alkine und Vinylverbindungen, oder für ein Strukturelement, welches sich ableitet von Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide,
n und m gleich oder verschieden sind und jeweils im Bereich von 0 bis 10.000 liegen,
t 0 oder 1 ist, sofern n= 0, und gleich 1 ist, sofern n ≠ 0, und
X für C(Z₂), N(Z), P(Z), P(=O)(Z), O, S, S(=O) oder S(=O)₂ steht, wobei Z in diesen Resten die gleiche Bedeutungen besitzen kann, wie zuvor ausgeführt.

2. Nitrilkautschuk nach Anspruch 1, worin die Reste Z und R jeweils ein- oder mehrfach substituiert sind, bevorzugt durch ein oder mehrere Substituenten, die alle Bedeutungen annehmen können, die für Z gelten, besonders bevorzugt durch einen oder mehrere Substituenten ausgewählt aus der Gruppe bestehend aus Fluor, Chlor, Brom oder Iod, Alkyl, Carbocyclyl, Heterocyclyl, Aryl, Heteroaryl, Arylalkyl, Heteroarylalkyl, Alkoxy, Aryloxy, Alkylthio, Arylthio, Amino, Amido, Carbamoyl, Carbonyl, Carboxy, Oxycarbonyl, Oxysulfonyl und Epoxy.

3. Nitrilkautschuk nach Anspruch 1, der als allgemeine Strukturelemente (ii) 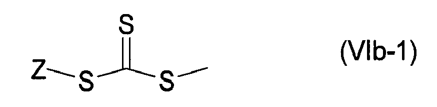 und
-R (VIb-2)
enthält, worin
Z die in Anspruch 1 genannten Bedeutungen besitzt und
R die in Anspruch 1 genannten Bedeutungen besitzt, allerdings mit der Einschränkung, dass R nach homolytischer Spaltung der Bindung zum nächsten gebundenen Atom im gegebenenfalls hydrierten Nitrilkautschuk entweder ein sekundäres, tertiäres oder aromatisch stabilisiertes Radikal ausbildet.

4. Nitrilkautschuk nach Anspruch 3, wobei R mit der Maßgabe, dass R nach homolytischer Spaltung zum nächsten Atom im Nitrilkautschuk entweder ein sekundäres, tertiäres oder aromatisch stabilisiertes Radikal ausbildet, entweder
- für einen linearen oder verzeigten, gesättigten oder ein- oder mehrfach ungesättigten, optional ein- oder mehrfach substituierten Alkylrest steht, bevorzugt für einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-y l, 2-Methylpropionsaeure-2-yl oder 1H,1H,2-Keto-3-oxo-4H,4H,5H,5H-perfluorundecanyl, oder
- für einen gesättigten oder ein- oder mehrfach ungesättigten, optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)arylrest, inbesondere für Phenyl, Pyridinyl oder Anthracenyl,
- für einen (Hetero)Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen steht.

5. Nitrilkautschuk nach Anspruch 1, der folgende allgemeine Strukturelemente (ii) aufweist, 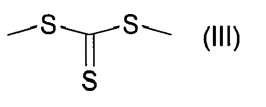 und
-R (II')
und/oder
-Z (I')
worin
Z die gleichen Bedeutungen besitzt wie in Anspruch 1 und
R die gleichen Bedeutungen besitzt wie in Anspruch 1 für die Variante b) mit m=0, und
R und Z gleich oder verschieden sind, allerdings jeweils mit der Maßgabe, dass R und Z nach homolytischer Spaltung ihrer Bindung zum jeweils nächsten Atom im Nitrilkautschuk jeweils ein sekundäres, tertiäres oder aromatisch stabilisiertes Radikal ausbilden.

6. Nitrilkautschuk nach Anspruch 5, wobei R und Z gleich oder verschieden sind und mit der Maßgabe, dass R und Z nach homolytischer Spaltung der Bindung zum jeweils nächsten Atom im Nitrilkautschuk jeweils ein sekundäres, tertiäres oder aromatisch stabilisiertes Radikal ausbilden,
- für einen linearen oder verzweigten, gesättigten oder ein- oder mehrfach ungesättigten, optional ein- oder mehrfach substituierten Alkylrest stehen, bevorzugt für einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ein- oder mehrfach ungesättigten, optional ein- oder mehrfach substituierten Carbo- oder Heterocyclylrest stehen, inbesondere für Cyclohexyl, Cumyl oder Cyclohexan-1-nitril-1-yl,
- für einen (Hetero)Arylrest stehen, ganz besonders bevorzugt für einen C₆-C₂₄-(Hetero)arylrest, inbesondere für Phenyl, Pyridinyl oder Anthracenyl,
- für einen (Hetero)Aralkylrest stehen, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen stehen.

7. Nitrilkautschuk nach Anspruch 1, der folgende allgemeine Strukturelemente (ii) aufweist, 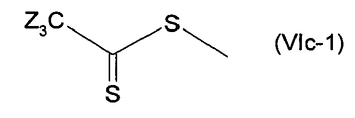 und
-R (VIc-2)
worin
Z die in Anspruch 1 genannten Bedeutungen besitzt,
R die in Anspruch 1 genannten Bedeutungen besitzt, allerdings mit der Einschränkung, dass R nach homolytischer Spaltung der Bindung zum nächsten Atom im Nitril-kautschuk ein sekundäres, tertiäres oder aromatisch stabilisiertes Radikal ausbildet.

8. Nitrilkautschuk nach Anspruch 7, worin R mit der Maßgabe, dass R nach homolytischer Spaltung der Bindung zum nächsten Atom im Nitrilkautschuk ein sekundäres, tertiäres oder aromatisch stabilisiertes Radikal ausbildet,
- für einen linearen oder verzweigten, gesättigten oder ein- oder mehrfach ungesättigten, optional ein- oder mehrfach substituierten Alkylrest steht, bevorzugt für einen entsprechenden C₃-C₂₀-Alkylrest insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ein- oder mehrfach ungesättigten, optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)arylrest, inbesondere für Phenyl, Pyridinyl oder Anthracenyl,
- für einen (Hetero)Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen steht.

9. Nitrilkautschuk nach einem der Ansprüche 1 bis 8, wobei als konjugiertes Dien mindestens ein (C₄-C₆) konjugiertes Dien, bevorzugt 1,2-Butadien, 1,3-Butadien, Isopren, 2,3-Dimethylbutadien, Piperylen oder Gemische daraus und als α,β-ungesättigtes Nitril mindestens ein (C₃-C₅)-α,β-ungesättigtes Nitril, bevorzugt Acrylnitril, Methacrylnitril, Ethacrylnitril oder Mischungen davon, eingesetzt werden und optional ein oder mehrere weitere copolymerisierbare Termonomere ausgewählt aus der Gruppe bestehend aus aromatischen Vinylmonomeren, bevorzugt Styrol, α-Methylstyrol und Vinylpyridin, fluorhaltigen Vinylmonomeren, bevorzugt Fluorethylvinylether, Fluorpropylvinylether, o-Fluormethylstyrol, Vinylpentafluorbenzoat, Difluoroethylen und Tetrafluoroethylen, copolymerisierbaren Antiageing Monomeren, bevorzugt N-(4-anilinophenyl) acrylamid, N-(4-anilinophenyl) methacrylamid, N-(4-anilinphenyl) cinnamide, N-(4-anilinophenyl) crotonamid, N-phenyl-4-(3-vinylbenzyloxy) anilin und N-phenyl-4-(4-vinylbenzyloxy) anilin, nicht-konjugierten Dienen, bevorzugt 4-Cyanocyclohexen und 4-Vinylcyclohexen, Alkine, bevorzugt 1-Butin und 2-Butin, α,β-ungesättigte Monocarbonsäuren, deren Ester und Amide, α,β-ungesättigte Dicarbonsäuren, deren Mono- und -Diester, deren entsprechenden Anhydride und Amide.

10. Nitrilkautschuk nach einem der Ansprüche 1 bis 9, der einen Polydispersitätsindex (=Mw/Mn; wobei Mw das Gewichtsmittel des Molekulargewichts und Mn das Zahlenmittel des Molekulargewichts darstellt) im Bereich von 1,1-2,5, bevorzugt 1,3-2,4, besonders bevorzugt 1,4-2,2, insbesondere 1,5-2,0, ganz besonders bevorzugt von 1,5 - kleiner 2 besitzt.

11. Verfahren zur Herstellung von Nitrilkautschuken, wobei
a) zunächst eine radikalische Polymerisation mindestens eines konjugierten Diens, mindestens eines α,β-ungesättigten Nitrils und gegebenenfalls eines oder mehrerer weiterer copolymerisierbarer Monomere in Gegenwart mindestens eines organischen Lösungsmittels und mindestens eines Reglers durchgeführt wird und
b) optional anschließend eine Hydrierung,
wobei als Regler in Schritt a) mindestens eine Verbindung der allgemeinen Strukturformel (VI) eingesetzt wird, 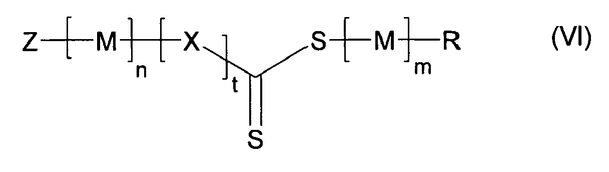 worin
Z für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Hydroxyimino, Carbamoyl, Alkoxycarbonyl, F, Cl, Br, I, Hydroxy, Phosphonato, Phosphinato, Alkylthio, Arylthio, Sulfanyl, Thiocarboxy, Sulfinyl, Sulfono, Sulfino, Sulfeno, Sulfonsäuren, Sulfamoyl, Silyl, Silyloxy, Nitril, Carbonyl, Carboxy, Oxycarbonyl, Oxysulfonyl, Oxo, Thioxo, Borate, Selenate, Epoxy, Cyanate, Thiocyanate, Isocyanate, Thioisocyanate und Isocyanide,
R (a) für den Fall, dass m # 0 ist, die gleichen Bedeutungen besitzt wie der Rest Z und (b) für den Fall, dass m = 0 ist, für H, einen linearen oder verzweigten, gesättigten, ein-oder mehrfach ungesättigten Alkylrest, einen gesättigten, ein- oder mehrfach ungesättigten Carbo- oderHeterocyclylrest, Aryl, Heteroaryl, A rylalkyl, Heteroarylalkyl, Alkoxy, Aryloxy, Heteroaryloxy, Amino, Amido, Carbamoyl, Alkoxy, Aryloxy, Alkylthio, Arylthio, Sulfanyl, Thiocarboxy, Sulfmyl, Sulfono, Sulfino, Sulfeno, Sulfonsäuren, Sulfamoyl, Carbonyl, Carboxy, Oxycarbonyl, Oxysulfonyl, Oxo, Thioxo, Epoxy, Cyanate, Thiocyanate, Isocyanate, Thioisocyanate oder Isocyanide steht,
M für Wiederholungseinheiten eines oder mehrerer, ein- oder mehrfach ungesättigter Monomeren steht, umfassend konjugierte oder nicht-konjugierte Diene, Alkine und Vinylverbindungen, oder für ein Strukturelement, welches sich ableitet Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide,
n und m gleich oder verschieden sind und jeweils im Bereich von 0 bis 10.000 liegen,
t 0 oder 1 ist, sofern n= 0, und gleich 1 ist, sofern n ≠ 0, und
X für C(Z₂), N(Z), P(Z), P(=O)(Z), O, S, S(=O) oder S(=O)₂ steht, wobei Z in diesen Resten die gleiche Bedeutungen besitzt, wie zuvor für die Formel (VI) ausgeführt.

12. Verfahren nach Anspruch 11, wobei in Schritt a) ein Regler der allgemeinen Struktur (VIa) eingesetzt wird, 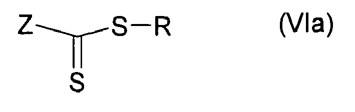 bei dem die Reste Z und R alle in Anspruch 11 genannten Bedeutungen annehmen können.

13. Verfahren nach Anspruch 11, wobei in Schritt a) ein Regler der allgemeinen Formel (VIb) eingesetzt wird, 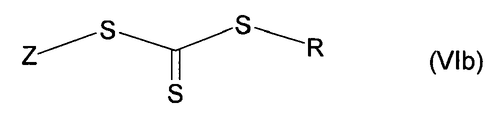 bei dem
Z die zuvor für die allgemeine Formel (VI) in Anspruch 11 genannten Bedeutungen besitzt,
R die zuvor für die allgemeine Formel (VI) in Anspruch 11 für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbildet.

14. Verfahren nach Anspruch 11, wobei ein Regler der allgemeinen Formel (VIc) eingesetzt wird, 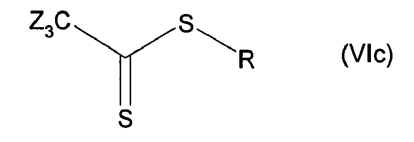 Z die für die allgemeine Formel (VI) in Anspruch 11 genannten Bedeutungen besitzt,
R die für die allgemeine Formel (VI) in Anspruch 11 für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbildet.

15. Verfahren nach Anspruch 11, wobei ein Regler der allgemeinen Formel (VId) eingesetzt wird, 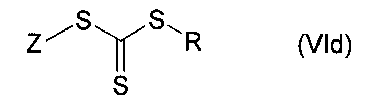 worin
Z die in Anspruch 11 genannten Bedeutungen besitzt, allerdings mit der Einschränkung, dass Z nach homolytischer Spaltung der S-Z Bindung ein primäres Radikal ausbildet, und
R die gleichen Bedeutungen wie Z in Anspruch 11 besitzt, allerdings mit der Einschränkung, dass R nach homolytischer Spaltung der S-R Bindung entweder ein sekundäres, tertiäres oder aromatisch stabilisiertes Radikal ausbildet, und
mit der zusätzlichen Maßgabe, dass Z und R verschiedene Bedeutungen annehmen.

16. Verfahren nach Anspruch 11, wobei ein Regler der allgemeinen Formel (VIe) eingesetzt wird, 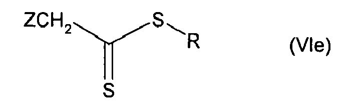 worin
Z alle in Anspruch 11 genannten Bedeutungen besitzen kann und
R die gleichen Bedeutungen wie Z in Anspruch 11 besitzt, allerdings mit der Einschränkung, dass R nach homolytischer Spaltung der S-R Bindung entweder ein sekundäres, tertiäres oder aromatisch stabilisiertes Radikal ausbildet.

17. Verfahren nach Anspruch 11, wobei als Regler in Schritt a) Dodecylpropansäuretrithiocarbonat (DoPAT), Dibenzoyltrithiocarbonat (DiBenT), Cumylphenyldithioacetat (CPDA), Cumyldithiobenzoat, Phenylethyldithiobenzoat, Cyanoisopropyldithiobenzoat, 2-Cyanoethyldithiobenzoat, 2-Cyanoprop-2-yl-dithiophenylacetat, 2-Cyanoprop-2-yl-dithiobenzoat, S-Thiobenzoyl-1H,1H,2-Keto-3-oxa-4H,4H,5H,5H-perfluoroundecanthiol oder S-Thiobenzoyl-1-phenyl-2-keto-3-oxa-4H,4H, 5H,5H-perfluoro-undecanthiol eingesetzt wird.

18. Vulkanisierbare Mischungen enthaltend den Nitrilkautschuk nach einem der Ansprüche 1 bis 10, mindestens einen Vernetzer, optional mindestens einen Füllstoff und optional ein oder mehrere weitere Kautschukadditive.

19. Verfahren zur Herstellung von Vulkanisaten, **dadurch gekennzeichnet, dass** die vulkanisierbare Mischung nach Anspruch 18 einer Vernetzung unterzogen wird, bevorzugt durch Zusatz mindestens eines Vernetzers oder durch photochemische Aktivierung.

20. Vulkanisate, bevorzugt Formteile, erhältlich durch das Verfahren nach Anspruch 19.
